# EUROPEAN PATENT SPECIFICATION

(11) **EP 4 021 625 B1**
(45) Date of publication and mention of the grant of the patent: **14.06.2023**
(21) Application number: 20788802.5
(22) Date of filing: 10.10.2020
(51) Int. Cl.: B01J 8/02, B01J 4/00, B01D 3/00, B01D 15/22

(54) **GRID-LIKE SYMMETRICAL DISTRIBUTOR OR COLLECTOR ELEMENT**
GITTERARTIGES SYMMETRISCHES VERTEILER- ODER KOLLEKTORELEMENT
ÉLÉMENT DE DISTRIBUTEUR OU DE COLLECTEUR SYMÉTRIQUE DE TYPE GRILLE

(30) Priority: 05.11.2019 EP 19207308
(43) Date of publication of application: 06.07.2022
(73) Proprietor: Hirschberg Engineering AG, 8404 Winterthur (CH)
(72) Inventor: HIRSCHBERG, Sebastian, 8408 Winterthur (CH)
(74) Representative: Henkel & Partner mbB
(86) International application number: PCT/EP2020/078522
(87) International publication number: WO 2021/089274

(56) References cited:
- EP-A1- 1 627 198
- US-A- 4 557 877
- US-A1- 2002 079 597
- US-A1- 2003 172 724
- US-A1- 2004 140 252
- US-A1- 2007 297 285
- US-A1- 2011 080 802
- US-A1- 2014 284 392
- US-A1- 2017 266 583
- US-A1- 2019 046 949

## Description

The present invention relates to a distributor element for uniformly distributing a first fluid on a cross-sectional plane or a collector element for collecting a first fluid being distributed on a cross-sectional plane, such as on a cross-sectional plane of a mass transfer column, a mixer, a disperser, a foaming device, a chemical reactor or the like, wherein a second main fluid flows in co-current flow and/or in counter-current flow with regard to the first fluid through the distributor element. In addition, the present invention relates to an apparatus, such as a mass transfer column, which comprises one or more of such distributor elements and/or collector elements.

In many technical processes, a fluid has to be uniformly distributed on a cross-sectional plane of an apparatus, while a second fluid flows through this plane. Both fluids may be a liquid or a gas or one of the fluids is a gas, while the other is a liquid. Examples for such processes are mass-transfer processes, such as rectification, absorption and the like, mixing processes, dispersing processes, foaming processes or the like and examples for respective apparatuses are chemical reactors, rectification columns, absorption columns, gas scrubbers, falling film evaporators, film crystallizers, gas drying apparatuses, mixing devices and the like.

Typically, a distributor element is used together with another device, wherein the distributor element uniformly distributes a first fluid on or across, respectively, a cross-sectional plane of the other device. The other device is, for instance, in a mass transfer process any type of packings, such as a structured packing, whereas the device is in chemical reactors a reactor, which is operated with different types of heterogenous or homogeneous catalysts, in falling film evaporators or film crystallizers a pipe bundle, in gas scrubbers and gas drying apparatuses a packing or a mixer, in apparatuses for absorption of gas in a liquid, for dispersing or for foaming one or more static mixer(s).

Conventional distributor elements for liquids comprise open channels, through which liquid is transferred in regular distances through openings directly or via sheets indirectly onto the plane, such as the surface of a structured packing in a mass transfer column. Such distributor elements are described for example in US 4,855,089, in US 3,158,171 and in EP 0 112 978 B1. However, these distributor elements are expensive. A further disadvantage of these distributor elements is that it has to be assured during their operation that the liquid level is in all channels the same, since the liquid level determines the volume flow through the channel openings. Moreover, at least some of these distributor elements have a comparable high pressure loss and hinder the flow of the second main flow. The same applies for respective collector elements. Some other distnbutor/collector elements are also known from US 2007/297285 A1, US 2004/140252 A1, US 2019/046949 A1, US 2011/080802 A1, US 2017/266583 A1, US 2003/172724 A1, EP 1 627 198 A1, US 4 557 877 A , US 2002/079597 A1 and US 2014/284392 A1.

In order to distribute gas, often distribution lances are applied. These distribution lances comprise nozzles, which have to be embodied so that during the operation the volume flow therethrough is the same. Similar distribution lances may be used for distributing liquids. A plurality of such distribution lances may be combined to a lance grid. However, also these distributor elements are expensive and complex to be operated, have a comparable high pressure loss and hinder the flow of the second main flow. The same applies for respective collector elements.

In view thereof, the object underlying the present invention is to provide a distributor element, which uniformly distributes with a high distribution density a first fluid on a cross-sectional plane, or a collector element, which uniformly collects a first fluid being distributed on a cross-sectional plane, in particular on a cross-sectional plane of a mass transfer column, while it essentially does not interfere with the flow of a second fluid through the plane, wherein the distributor or collector element is easy and cost-efficient to produce.

In accordance with the present invention, this object is satisfied by providing a distributor element for uniformly distributing a first fluid on a cross-sectional plane or collector element for collecting a first fluid being distributed on a cross-sectional plane, wherein a second main fluid flows in co-current flow and/or in counter-current flow with regard to the first fluid through the distributor element, wherein the distributor element comprises at least three plates being arranged at least substantially parallel to each, wherein a level is defined between each of two adjacent plates, wherein each of the plates comprises a number of openings, wherein in each of the levels walls are arranged, each of which extending from one side of a plate onto the adjacent side of an adjacent plate such that each wall defines a channel to be flowed through by the second main fluid, wherein the channels fluid-tightly connect all openings between adjacent plates, wherein in each of the levels between the walls defining the channels one or more hollow spaces are formed, through which the first fluid may flow, wherein each of the plates comprises at least one aperture not being fluid-tightly connected with one or more openings of an adjacent plate by a channel and being arranged adjacent to one of the one or more hollow spaces of the adjacent level(s) so that in each level between the apertures of the adjacent plates at least two fluid paths extend in the one or more hollow spaces of the level, wherein all of the at least two fluid paths of each level have substantially the same length, and wherein the number of fluid paths increases, seen in the direction from a first outermost plate to the opposite outermost plate of the distributor or collector element, at least for 75% of the plates from level to level, and wherein the channels to be flowed through by the second main fluid are fluid-tightly separated by the walls from all of the one or more hollow spaces defining the fluid paths, through which the first fluid may flow.

The collector element in accordance with the present invention is identical to the distributor element in accordance with the present invention. However, during its use the collector element is inverted with regard to the distributor element, i.e. the uppermost plate of the distributor element corresponds to the lowermost plate of the collector element and vice versa.

While the channels allow the second main fluid, such as a gas, to flow, such as ascend, through the distributor or collector element essentially without interference, the fluid paths defined in the hollow spaces between the walls defining the channels of each level allow the first fluid, such as liquid, to be distributed over the cross-sectional plane of the distributor element or collected over the cross-sectional plane of the collector element, respectively. Since the number of fluid paths increases, seen in the direction from the first outermost plate to the opposite outermost plate of the distributor or collector element, from level to level, the distribution density of the first fluid increases in the same direction assuring in the outermost level of the distributor or collector element an excellently uniform distribution of the first fluid over the cross-sectional plane of the distributor element. Or, seen in the other direction of the distributor or collector element, the change of the number of fluid paths assures an efficient collection of the first fluid over the cross-sectional plane of the outermost plate of the collector element and an efficient concentration of the first fluid in one point of the opposite outermost plate of the collector element. The uniform distribution of the first fluid over the cross-sectional plane of the distributor element is efficiently enhanced by the fact that all of the fluid paths of each level have substantially the same length and flow resistance. On account of this reason, the first liquid flows uniformly through all available fluid paths and not selectively more through some than others of them. Therefore, the provision of fluid paths having substantially the same length (and thus same flow resistance) and the increment of the number of fluid paths, seen in the direction from the first outermost plate to the opposite outermost plate, from level to level synergistically lead together to the excellent uniform distribution from level to level of the distributor element during its use. All in all, the distributor element in accordance with the present invention allows to excellently uniformly distribute a first fluid, such as liquid, on a cross-sectional plane of for instance a mass transfer column, while it essentially does not interfere with the flow of a second fluid through the plane and consequently has during operation a low pressure loss. Likewise, the collector element in accordance with the present invention allows to uniformly collect a first fluid, such as liquid, being distributed on a cross-sectional plane of for instance a mass transfer column, while it essentially does not interfere with the flow of a second fluid through the plane and consequently has during operation a low pressure loss. In particular, the distributor element in accordance with the present invention allows to obtain a particular high distribution density and the collector element in accordance with the present invention allows to collect fluid being distributed on a cross-sectional plane in a particular high distribution density. Particularly, the present invention allows to easily and cost-efficiently obtain a distributor element having at its bottom up to 200,000 and even up to 1,500,000 fluid outlets per square meter. The commercially available distributor elements do only have 100 to 200 fluid outlets per square meter. A further particular advantage of the present invention is that the distributor or collector element can be, as described in detail further below, easily and cost-efficiently produced in particular by a generative production method, such as by screen printing.

The terms "opening" and "aperture" are each used in accordance with the present invention with the same meaning, namely recess or hole, respectively, in a plate. However, in order to improve the clarity the term "opening" is used exclusively for a recess or hole of a plate, which is fluid-tightly connected with one or more opening(s) of an adjacent plate by a channel, whereas the term "aperture" is used exclusively for a recess or hole of a plate not being fluid-tightly connected with one or more openings of an adjacent plate by a channel. On the contrary, any "aperture" is adjacent to one or more hollow spaces of the level(s), to which the aperture is adjacent.

In addition, the term that the channels "fluid-tightly connect all openings between adjacent plates" means that the channels surround the openings of adjacent plates and connect them with each other so that second fluid flowing through the opening of one plate is guided by the inner wall of the channel to the opening of the adjacent plate and cannot enter the hollow space (through which the second fluid flows) being outside the channels. This does not necessarily mean that each channel fluid-tightly connects exactly one opening of the plate with exactly one opening of the adjacent plate. On the contrary, it is possible that one channel connects exactly one opening of the plate with two or more openings of the adjacent plate or even that one channel connects two or more openings of the plate with two or more openings of the adjacent plate. However, any opening of the plate is connected with at least one opening of the adjacent plate and any opening of the adjacent plate is connected with at least one opening of the plate. Thus, the channels "fluid-tightly connect all openings between adjacent plates" and simultaneously fluid-tightly separate the interior of the channels from the hollow space(s) of the levels. In order to achieve this, the channel wall is typically attached to a side of the plate such that it completely surrounds or covers or encases, respectively, the opening, whereas the channel wall extends from this side of the plate through the adjacent level onto the opposite side of the adjacent plate, where it completely surrounds or covers, respectively, one or more openings of the adjacent plate.

Moreover, the term "at least substantially parallel to each other" means in accordance with the present invention that two adjacent plates are not inclined in relation to each other by more than 10°, preferably by not more than 5°, more preferably by not more than 2° and still more preferably by not more than 1°. Most preferably, two adjacent plates are arranged parallel to each other, i.e. they are not inclined in relation to each other.

Furthermore, the term "level" means in accordance with the present invention the space between an upper plate and a lower plate, wherein in this space the channels to be flowed through by the second main fluid and the hollow space(s) defining the fluid paths are arranged. Each "level" comprises the channels, with are separated by each other by the hollow spaces. Thus, the total volume of each level is the sum of the volumes of the channels plus the sum of the volume(s) of the hollow space(s).

Accordingly, the term "hollow space" means the total volume of a level minus the sum of the volumes of the channels minus optional further components provided n the level, such as partition walls or the like, i.e. the "hollow space" is a 3-dimensional space. If in the level no partition wall(s) or the like are provided connecting some of the outsides of two or more of the channel walls with each other, the level will only comprise one hollow space. However, it is possible to connect some outsides of two or more of the channel walls with each other for instance by one or more partition walls to subdivide the remaining hollow space into several hollow spaces.

In contrast to the term "hollow space", the term "fluid path of a level" means in accordance with the present invention the line from an aperture of a plate being adjacent to the hollow space of a level through the hollow space to an aperture of an adjacent plate being on the opposite site of the hollow space of the same level. Except for only theoretical possible designs of the plates, any level will in practice comprise more than one fluid path, even if the level only comprises one hollow space. This is in particular the case, when at least one of both plates has more than one aperture. In other words, a "fluid path of a level" is the line (or way, respectively) a liquid may take, when it enters the hollow space of the level via the aperture of one plate and leaves the hollow space on the opposite side of the same level via one of the apertures of the adjacent plate. All in all, while the "hollow space" is a volume (namely to total volume of a level minus the sum of the volumes of the channels), the "fluid path" is a line (or way, respectively) connecting an aperture of a plate through the hollow space with the aperture of an adjacent plate. Accordingly, the length of a "fluid path of a level" is the distance from the aperture a plate following the fluid path through the hollow space of the level until the aperture of the adjacent plate, whereas the length of a "fluid path of a distributor or collector element" is the distance from an aperture of the first outermost plate following the fluid paths through the hollow spaces of all of the levels until the aperture of the opposite outermost plate of the distributor or collector element.

"Fluid paths of each level" having "substantially the same length" means in accordance with the present invention that each of the fluid paths of the level does not vary more in the length compared to the length of any other fluid path of the same level by more than 20%, preferably not more than 10%, more preferably not more than 5%, even more preferably not more than 2% and still more preferably not more than 1%. Most preferably of course, all fluid paths of each level have exactly the same length.

In addition, "a second main fluid flows in co-current flow and/or in counter-current flow with regard to the first fluid through the distributor or collector element" means that the second fluid flows from the lowermost edge of the element to the uppermost edge of the element or vice versa and that also the first fluid flows from the lowermost edge of the element to the uppermost edge of the element or vice versa.

Finally, the term according to which "the number of fluid paths increases, seen in the direction from the first outermost plate to the opposite outermost plate of the distributor or collector element, at least for 75% of the plates from level to level" means that at least 75% of all plates of the distributor or collector element have a lower number of fluid paths than a plate being adjacent in the direction seen from the first outermost plate to the opposite outermost plate, i.e. being adjacent behind the plate. Thus, if the distributor or collector element comprises three plates, all plates have to fulfil this criterion. If the distributor or collector element comprises four to seven plates, all but one plate have to fulfil this criterion, if the distributor or collector element comprises eight to eleven plates, all but two plates have to fulfil this criterion and the like.

It is a matter of course that the effects of the present invention are obtained in a higher degree, the more plates fulfil the aforementioned criterion. Accordingly, it is preferred that the number of fluid paths increases, seen in the direction from a first outermost plate to the opposite outermost plate of the distributor or collector element, at least for 80%, more preferably for at least for 90%, even more preferably for at least for 95%, still more preferably for at least for 98% and most preferably for all of the plates from level to level.

In accordance with a first particular preferred embodiment of the present invention, the increment of the number of fluid paths from level to level is achieved by increasing the number of channels, seen in the direction from the first outermost plate to the opposite outermost plate of the distributor or collector element, from level to level. By increasing the number of channels, the number of channel walls and thus the number of deflection points in the hollow space of the level is increased, why the number of fluid paths increases.

In accordance with a second particular preferred embodiment of the present invention, the increment of the number of fluid paths from level to level is achieved by increasing the number of apertures of a plate, seen in the direction from the first outermost plate to the opposite outermost plate of the distributor or collector element, from level to level. By increasing the number of apertures, the number of possible lines to follow by the first fluid in the hollow space of the level is increased, why the number of fluid paths increases.

In accordance with a third particular preferred embodiment of the present invention, the first and second particular preferred embodiments are combined, i.e. the increment of the number of fluid paths from level to level is achieved by increasing the number of channels, seen in the direction from the first outermost plate to the opposite outermost plate of the distributor or collector element, from level to level and by increasing the number of apertures of a plate, in the same direction, from level to level.

In a further development of the idea of the present invention, it is suggested that the lengths of at least 80% of the fluid paths extending from an aperture of the first outermost plate to an aperture of the opposite outermost plate of the distributor or collector element are at least substantially the same. In this embodiment not only the fluid paths of the same level have substantially the same length, but also the fluid paths extending through the entire distributor or collector element. Also, in this embodiment, "at least substantially the same length" means that each of the fluid paths does not vary more in the length compared to the length of any other fluid path by more than 20%, preferably not more than 10%, more preferably not more than 5%, even more preferably not more than 2% and still more preferably not more than 1%. Most preferably of course, all fluid paths extending through the entire distributor or collector element of each level have exactly the same length.

In order to feed the first fluid into the first level in a controlled manner, it is suggested in a further development of the idea of the present patent application that the first outermost of the at three plates comprises an inlet through which the first fluid is transferred into hollow space comprising the fluid paths of the first level. The inlet may have the form of a pipe, which covers an aperture of the first outermost plate so that the first fluid may flow through the pipe and through the aperture into the hollow space comprising the fluid paths of the first level. Preferably, the aperture and thus also the inlet are arranged centrally in and on the plate, respectively.

More preferably, the lengths of at least 90%, even more preferably of at least 95%, still more preferably of at least 98% and most preferably of all the fluid paths extending from an aperture of the first outermost plate to an aperture of the opposite outermost plate of the distributor or collector element are at least substantially the same.

In accordance with a further particularly preferred embodiment of the present invention, it is suggested that all of the openings of at least one of the at least three plates of the distributor or collector element are at least substantially regularly arranged in the at least one plate. More preferably, all of the openings of each of the at least three plates are at least substantially regularly arranged in each of the at least three plates. This allows to easily and precisely assure that all fluid paths of the level have substantially the same length. In this embodiment, it is further preferred that also all of the channels of each of the at least three plates are at least substantially regularly arranged in each level between each adjacent two of the at least three plates, meaning that the channels are extending perpendicular with regard to the surface of the plate towards that of the adjacent plate.

An at least substantially regular arrangement of the channels in each of the at least three plates means that preferably each of the distances between the center point of one opening and the center point of the closest adjacent opening of at least one and preferably of each of the at least three plates is 80 to 120% of the average distance of the center points of all openings and their closest adjacent openings of the respective plate. The average distance of the center points of all openings with their closest adjacent openings of the respective plate is determined by measuring the distances between the center points of each opening and the center point of its closest opening of the plate, by summing up all these measured distances of the plate and by dividing the sum by the number of openings of the plate.

Such a regular arrangement may be easily achieved, when the openings of each of the at least three plates are at least substantially grid-like arranged in at least one and preferably in each of the at least three plates. In this case, the plate is a framework surrounding the openings and apertures, i.e. the framework of a plate is formed by all parts of the plate except the openings and apertures, i.e. except all holes, recesses or the like.

For instance, the framework of each of the at least three plates comprises and preferably consists of at least substantially parallel and crossed bars, wherein a first half of the bars is arranged in the length direction and a second half of the bars is arranged in the width direction of the plate. The angle between each of the bars of the first half and each of the bars of the second half is 70 to 110°, preferably 80 to 100°, more preferably 85 to 95° and most preferably about 90°, wherein the angle of each bar of the first half and each of its adjacent bars of the first half is 160 to 200°, preferably 170 to 190°, more preferably 175 to 185° and most preferably about 180°, and wherein the angle of each bar of the second half and each of its adjacent bars of the second half is 160 to 200°, preferably 170 to 190°, more preferably 175 to 185° and most preferably about 180°.

The present invention is not particularly limited concerning the form of the openings of the at least three plates. For example, the openings may have a circular, an elliptic, an oval, a rectangular or a square cross-sectional form. Preferably, all openings have the same form and all openings of each plate have the same dimensions. Good results are in particular obtained, when the openings of each plate have an at least substantially rectangular or square cross-sectional form, wherein the edges of the openings of the rectangle or square, respectively, may be rounded. Substantially rectangular or square means that each opening is bordered by four linear edges of the framework of the plate, wherein each the angles between any two of the four linear edges is 70 to 110°, preferably 80 to 100°, more preferably 85 to 95° and most preferably about 90°.

In order to easily achieve a regular pattern of the openings and at least substantially same length of fluid paths in the adjacent level, it is proposed in a further development of the idea of the present invention that the openings of at least one of and preferably of each of the at least three plates are arranged in the respective plate in (2)^{m} rows and (2)^{m} columns, wherein m is an integer of 1 to 10, preferably of 1 to 8 and more preferably of 2 to 6.

Good results are in particular achieved, when also all of the apertures of at least one of the at least three plates are at least substantially regularly arranged in the at least one plate and preferably all of the apertures of each of the at least three plates are at least substantially regularly arranged in each of the at least three plates. Also, this embodiment allows to easily assure that the lengths of all of the fluid paths in the adjacent level are at least substantially the same. An at least substantially regularly arrangement of apertures means in this connection that each of the distances between the center point of one aperture and the center point of the closest adjacent aperture of at least one and preferably of each of the at least three plates is 80 to 120% of the average distance of the center points of all apertures and their closest adjacent apertures of the respective plate. The average distance of the center points of all apertures with their closest adjacent apertures of the respective plate is determined by measuring the distances between the center point of each aperture and the center point of its closest aperture of the plate, by summing up all these measured distances of the plate and by dividing the sum by the number of apertures of the plate.

The present invention is not particularly limited concerning the form of the apertures of the at least three plates. For example, the apertures of at least one of and preferably of each of the at least three plates are at least substantially circular, cross-shaped, rectangular or square, preferably at least substantially circular or cross-shaped and most preferably circular or cross-shaped.

The number of plates of the distributor or collector element in accordance with the present invention depends on the specific application. However, in general it is preferred that the distributor or collector element comprises 3 to 15, more preferably 3 to 12, still more preferably 3 to 10 and most preferably 3 to 5 plates, which are arranged at least substantially parallel to each other defining a level between each two adjacent plates.

All plates of the distributor or collector element may be arranged at least substantially horizontal. Substantially horizontal means that each plate does not vary in relation to the horizontal plane by more than 10°, preferably by not more than 5°, more preferably by not more than 2° and still more preferably by not more than 1°. Most preferably, each plate is arranged horizontally, i.e. is not inclined in relation to the horizontal plane.

As set out above, in accordance with a first particular preferred embodiment of the present invention the increment of the number of fluid paths from level to level is achieved by increasing the number of channels, seen in the direction from the first outermost plate to the opposite outermost plate of the distributor or collector element, from level to level. This may be achieved by using fractal plates. Fractal plate is defined in accordance with the present invention as a plate having, if arranged (seen in the direction from the first outermost plate to the opposite outermost plate) behind another plate, a higher number of openings than the other plate and, if it is the first outermost plate of the distributor or collector element, a lower number of openings than the adjacent plate.

The number of fractal plates of the distributor or collector element in accordance with the present invention depends on the specific application. However, in general it is preferred that the distributor or collector element comprises at least two, preferably at least three, more preferably 2 to 15, yet more preferably 3 to 12, still more preferably 3 to 10 and most preferably 3 to 5 fractal plates, wherein each of the fractal plates comprises a lower number of openings than a fractal plate being adjacent behind (i.e. adjacent in the direction from the first outermost to the opposite outermost fractal plate of the distributor or collector element) of the fractal plate. Preferably, all fractal plates are adjacent to each other, without having any non-fractal plate therebetween.

Good results are in particular achieved, when all fractal plates are adjacent to each other without having any non-fractal plate therebetween, with the first fractal plate being the outermost plate of the distributor or collector element.

In order to easily and reliably achieve an at least substantially same length of the fluid paths of a level, it is further suggested that the openings of the each of the fractal plates are at least substantially grid-like arranged in the respective plate. This is easily achievable, when the openings of each of the fractal plates are at least substantially rectangular or square.

In accordance with the present embodiment, the number of openings in each fractal plate (or forward fractal plate, respectively) is lower than the number of openings of a fractal plate (or backward fractal plate, respectively) being adjacent thereto in the direction from the first outermost to the opposite outermost plate of the distributor or collector element. All terms, "forward", "backward", "before", "behind" and the like in connection with the relative arrangement of the single plates are to be understood in relation to the direction from the first outermost to the opposite outermost plate of the distributor or collector element. The first outermost plate of the distributor or collector element is that of the two outermost plates of the distributor or collector element, which adjacent level has less fluid paths than the level being adjacent to the other of the two outermost plates of the distributor or collector element. In order to achieve an excellently uniform distribution of the first fluid over the cross-sectional plane it is preferred that the number of openings in each backward fractal plate is a multiple of the number of openings in the respective adjacent forward fractal plate. Particular good results are obtained as compromise between the desire to minimize the total number of fractal plates in the distributor or collector element and the desire of achieving a very high distribution density, when each backward fractal plate comprises 4-times more openings than the adjacent forward fractal plate. Therefore, it is particularly preferred that the number of openings in each fractal plate is 4 × (4)ⁿ, wherein n is the number of the respective fractal plate in relation to the first outermost fractal plate, with the first outermost fractal plate being fractal plate 1.

As set out above, the number of openings in each backward fractal plate is higher than the number of openings in the respective adjacent forward fractal plate. Likewise thereto, it is preferred that the number of apertures in each backward fractal plate is higher than the number of apertures in the respective adjacent forward fractal plate. More specifically, it is preferred that each fractal plate comprises a plurality of apertures, wherein the number of apertures is between 0,1 and 200%, preferably between 0,5 and 50%, more preferably between 1 and 20%, still more preferably between 3 and 10% and most preferably about 6,25% of the number of openings in the same fractal plate.

As set out above, in accordance with a second particular preferred embodiment of the present invention the increment of the number of fluid paths from level to level is achieved by increasing the number of apertures of a plate, seen in the direction from the first outermost plate to the opposite outermost plate of the distributor or collector element, from level to level. This may be achieved by using at least one distribution plate. Distribution plate is defined in accordance with the present invention as a plate having, if arranged (seen in the direction from the first outermost plate to the opposite outermost plate) behind (i.e. backwards) another plate, the same number of openings than the other plate (i.e. that being arranged before, i.e. which forwards) and, if it is the first outermost plate of the distributor or collector element, the same number of openings than the adjacent plate.

The number of distribution plates of the distributor or collector element in accordance with the present invention depends on the specific application. However, in general it is preferred that the distributor or collector element comprises at least two, preferably at least three, more preferably 3 to 15, yet more preferably 3 to 12, still more preferably 3 to 10 and most preferably 3 to 5 distribution plates, wherein each of the distribution plates has a higher number of apertures than the adjacent forward plate, if present.

Preferably, each of the at least one distribution plate has the same form as the adjacent forward plate and, if no adjacent forward plate is present, the same form as the adjacent backward plate, and wherein the openings are formed in each of the at least one distribution plate at the same locations as in the adjacent forward plate and, if no adjacent upper plate is present, at the same locations as in the adjacent backward plate.

Good results are in particular achieved, when all distribution plates are adjacent to each other, without having any non-distribution plate therebetween. If the distributor or collector element comprises at least one fractal plate, it is preferred that all distribution plates are adjacent to each other, without having any non-distribution plate therebetween, and are arranged - seen in the direction from the first outermost plate to the opposite outermost plate - behind all of the at least one fractal plate.

In order to easily and reliably achieve an at least substantially same length of the fluid paths of a level, it is further suggested that the openings of the each of the distribution plates are at least substantially grid-like arranged in the respective plate. This is easily achievable, when the openings of each of the distribution plates are at least substantially rectangular or square.

As set out above, in accordance with a third particular preferred embodiment of the present invention the increment of the number of fluid paths from level to level is achieved by increasing the number of channels, seen in the direction from the first outermost plate to the opposite outermost plate of the distributor or collector element, from level to level and by increasing the number of apertures of a plate, in the same direction, from level to level. In this embodiment, the distributor or collector element preferably comprises at least two, preferably at least three, more preferably 2 to 15, yet more preferably 3 to 12, still more preferably 3 to 10 and most preferably 3 to 5 fractal plates and 1 to 3 and preferably 2 or 3 distribution plates. Preferably, all fractal plates are adjacent to each other, without having any non-fractal plate therebetween, and all distribution plates are adjacent to each other, without having any non-distribution plate therebetween. Even more preferably all distribution plates are arranged - seen in the direction from the first outermost plate to the opposite outermost plate - behind all of the at least one fractal plate.

In accordance with a fourth particular preferred embodiment of the present invention, the distributor or collector element comprises only fractal plates and preferably 2 to 15, more preferably 3 to 12, still more preferably 3 to 10 and most preferably 3 to 5 fractal plates.

In accordance with a fifth particular preferred embodiment of the present invention, the distributor or collector element comprises only distribution plates and preferably 3 to 15, more preferably 3 to 12, still more preferably 3 to 10 and most preferably 3 to 5 distribution plates.

In a further variant of the third particular preferred embodiment of the present invention it is suggested that the distributor or collector element in accordance with the present invention comprises at least two fractal plates including a first outermost fractal plate and an adjacent second fractal plate, wherein the first outermost fractal plate has an at least substantially rectangular or square form and comprises 16 grid-like arranged, at least substantially rectangular or square openings, each of which having at least substantially the same size and form, wherein the 16 openings are arranged in the first outermost fractal plate equidistantly in 4 rows and 4 columns of openings. Preferably, each of the 16 openings of the first outermost fractal plate is surrounded by a wall extending at least substantially perpendicular from the lower surface from the first outermost fractal plate to the upper surface of the adjacent second fractal plate, thus forming in the first level between the first and second plate 16 closed channels to be flowed through by the second main fluid.

Openings having the same size means that the area of one of these openings does vary not more than 20%, preferably not more than 10%, more preferably not more than 5% and most preferably not more than 2% from the area of each of these openings.

Good results are achieved in this variant, when the second fractal plate being arranged adjacent to the first outermost fractal plate has an at least substantially rectangular or square form and comprises 64 grid-like arranged, at least substantially rectangular or square openings, each of which having at least substantially the same size and form, wherein the 64 openings are arranged in the second fractal plate equidistantly in 8 rows and 8 columns of openings, wherein each of the 64 openings of the second fractal plate is surrounded by a wall extending at least substantially perpendicular from the lower surface from the second fractal plate to the upper surface of the behind third plate, thus forming in the second level (which is defined between the second and the adjacent behind third plate) 64 closed channels to be flowed through by the second main fluid. Preferably, the second fractal plate comprises 4 apertures connecting the hollow space comprising the fluid paths of the first level with those of the second level, wherein one aperture is formed at the crossing point between the four channels of the first and second columns of the first and second rows, one aperture is formed at the crossing point between the four channels of the third and fourth columns of the first and second rows, one aperture is formed at the crossing point between the four channels of the first and second columns of the third and fourth rows and one aperture is formed at the crossing point between the four channels of the third and fourth columns of the third and fourth rows.

Optionally, the one or more fluid path(s) may be defined by partition walls, which are appropriately placed in the hollow space(s) between channel walls. Alternatively, the single fluid path(s) may be formed by filling parts of the gaps formed between the channels to be flowed through by the second main fluid, whereas other gaps formed between the channels to be flowed through by the second main fluid remain open, thus forming the fluid path(s)

Moreover, it is preferred in this variant of the present invention that the distributor or collector element comprises at least a third fractal plate being arranged behind the second fractal plate, wherein the third fractal plate has an at least substantially rectangular or square form and comprises 256 grid-like arranged, at least substantially rectangular or square openings, each of which having at least substantially the same size and form, wherein the 256 openings are arranged in the third fractal plate equidistantly in 16 rows and 16 columns of openings. Each of the 256 openings of the third fractal plate is surrounded by a wall extending at least substantially perpendicular from the lower surface from the third fractal plate to the upper surface of a behind plate, thus forming in the third level (which is defined between the third and the adjacent behind fourth plate) 256 closed channels to be flowed through by the second main fluid. Below each of the openings of the second fractal plate 4 openings of the third fractal plate are placed.

In a further development of the idea of the present invention it is suggested that in this variant the third fractal plate comprises 16 apertures connecting the hollow spaces comprising the fluid paths of the second level with those of the third level, wherein the apertures are formed in the fluid paths at the crossing points between the channels of columns 1, 3, 5, 7, 9, 11, 13 and 15 of rows 1, 3, 5, 7, 9, 11, 13 and 15. Preferably, the distributor or collector element of this variant comprises behind the third fractal plate a fourth fractal plate having an at least substantially rectangular or square form and comprising 1.024 grid-like arranged, at least substantially rectangular or square openings, each of which having at least substantially the same size and form, wherein the 1.024 openings are arranged in the fourth fractal plate equidistantly in 32 rows and 32 columns of openings.

Good results are particularly achieved, when in the above variant behind the last fractal plate a distribution plate is arranged, which has the same form and same number and dimensions of openings as the last fractal plate, wherein the distribution plate has no apertures in the fluid paths at the crossing-points below those, in which the apertures of the last fractal plate are located, but wherein the distribution plate has apertures at any crossing-point being adjacent to those, in which the apertures of the last fractal plate are located. Preferably, behind the distribution plate one to five, preferably one to four and more preferably two, three or four further distribution plates are arranged, which has/have the same form and same number and dimensions of openings as the last fractal plate and the distribution plate, wherein each of the further distribution plates has a higher number of apertures than its adjacent forward plate.

In a further development of the idea of this invention, it is proposed that the distributor or collector element of this variant comprises one to six, preferably one to five and more preferably two, three, four or five distribution plates, which all have the same form and same number and dimensions of openings, wherein each of the distribution plates has a higher number of apertures than its adjacent upper distribution plate.

As set out above, between each two plates a level is defined, through which the channels extend and in which the fluid paths are arranged. The height of each level, i.e. the distance between its upper and lower plate may be constant. However, in accordance with a further particular preferred embodiment of the present invention, the distance of the levels varies, whereas more preferably the height of each level decreases from the level being adjacent to the first outermost plate to the level being adjacent to the opposite outermost plate of the distributor or collector element. This has the advantage that the flow resistance within each level is not too high. The height of each level or at least of the first level may be between 0.2 and 250 mm, more preferably between 1 and 100 mm and most preferably between 2 and 50 mm.

The openings of each of the plates may have a diameter of 1 to 500 mm, more preferably of 1.5 to 100 mm and most preferably of 2 to 50 mm. As indicated above, it is preferred that the size or diameter, respectively, of the openings decreases from the first fractal plate to the last fractal plate, if any fractal plate is present. It is preferred that all openings of each plate have at least substantially the same size or diameter, respectively.

The apertures of each of the plates may have a size or diameter, respectively of 0.1 to 100 mm, more preferably of 0.2 to 50 mm and most preferably of 0.4 to 20 mm. It is preferred that all apertures of each plate have at least substantially the same size, such as diameter.

Each of the apertures having preferably at least substantially the same size means that the area of one of these apertures does vary not more than 20%, preferably not more than 10%, more preferably not more than 5% and most preferably not more than 2% from the area of each of these apertures.

Preferably, the lowest plate of the distributor element or the uppermost plate of the collector element has 1,000 to 1,500,000 and more preferably 20,000 to 200,000 fluid outlets per square meter.

The distributor or collector element, i.e. each of the plates, channel walls and, if present, partition walls, may be formed of any suitable material, such as a ceramic material, a plastic, a metal, an alloy, a composite material or the like. Particular preferred materials are technical ceramics such as but not limited to silicon carbide, silicon nitride, aluminum oxide, mullite and cordierite or metal materials such as but not limited to aluminum alloys or stainless steel or a wide range of plastic materials.

A particular advantage of the distributor element in accordance with the present invention is that it may be easily produced by a generative method, such as screen printing, such as by a method described in WO 2016/095059 A1.

According to another aspect, the present invention relates to an apparatus, which comprises one or more of the aforementioned distributor elements and/or one or more of the aforementioned collector elements.

For instance, the apparatus may be a mass transfer column, a mixer, a disperser, a foaming device, a chemical reactor, a crystallizer or an evaporator.

In accordance with a preferred embodiment of the present invention, the apparatus is a mass transfer column and comprises below the one or more distributor elements and/or above the one or more collector elements a mass transfer structure, which is selected from the group consisting of contact trays, random packings and structured packings.

In accordance with another preferred embodiment of the present invention, the apparatus is a mass transfer column and comprises below the one or more distributor elements and/or above the one or more collector elements a mass transfer structure, which has a honeycomb shape including capillaries, wherein the walls defining the channels are step-shaped or made of tissue or are arbitrarily formed open-cell foams. Such mass transfer structures are in more detail described in WO 2014/043823 A1 and in WO 2017/167591 A1.

In accordance with still another preferred embodiment of the present invention, the apparatus comprises below the one or more distributor elements and/or above the one or more collector elements a mass transfer structure, which comprises a contact zone, which contact zone is designed to conduct a second fluid, and whereby in the contact zone the first fluid can be brought into contact with the second fluid, wherein in the contact zone at least one flow breaker is provided for interrupting a flow of the second fluid.

In accordance with yet another preferred embodiment of the present invention, the apparatus comprises below the one or more distributor elements and/or above the one or more collector elements a mass transfer structure, which is selected from the group consisting of tissues, open-pored materials, capillaries, step structures and arbitrary combinations of two or more of the aforementioned structures.

Another aspect of the present invention is the use of an aforementioned distributor element for uniformly distributing a first fluid on a cross-sectional plane and/or of an aforementioned collector element in accordance with any of the preceding claims for collecting a first fluid being distributed on a cross-sectional plane comprising the step of flowing a first fluid into at least one of the one or more hollow spaces defining the fluid paths and flowing a second fluid through the channels of the distributor and/ element, wherein preferably the distributor and/ element is used in a mass transfer column, a mixer, a disperser, a foaming device or a chemical reactor.

Subsequently, the present invention is described by means of illustrative, but not limiting figures.
- Fig. 1: shows a perspective side view of a distributor element according to one embodiment of the present invention.
- Fig. 2: shows a top view of the distributor element shown in Fig 1.
- Fig. 3a: shows a cross-sectional view of the first level below the first fractal plate of the distributor element shown in Fig. 1.
- Fig. 3b: shows a schematic view of Fig. 3a.
- Fig. 4a: shows a cross-sectional view of the second level below the second fractal plate of the distributor element shown in Fig. 1.
- Fig. 4b: shows a schematic view of Fig. 4a.
- Fig. 5a: shows a cross-sectional view of the third level below the third fractal plate of the distributor element shown in Fig. 1.
- Fig. 5b: shows a schematic view of Fig. 5a.
- Fig. 6a: shows a cross-sectional view of the fourth level below the first distribution plate of the distributor element shown in Fig. 1.
- Fig. 6b: shows a schematic view of Fig. 6a.
- Fig. 6c: shows a schematic part of Fig. 6b magnified.
- Fig. 7a: shows a schematic view of the fifth level below the second distribution plate of the distributor element shown in Fig. 1.
- Fig. 7b: shows a schematic part of Fig. 7a magnified.
- Fig. 7c: shows a schematic view of the sixth level below the third distribution plate of the distributor element shown in Fig. 1.
- Fig. 7d: shows a schematic part of Fig. 7c magnified.
- Fig. 7e: shows a schematic view of the seventh level below the fourth distribution plate of the distributor element shown in Fig. 1.
- Fig. 7f: shows a schematic part of Fig. 7e magnified.
- Fig. 8: shows a perspective side view of the internal of a mass transfer column including a distributor element, a structured packing and a collector element according to one embodiment of the present invention.
- Fig. 9: shows a perspective side view of the internal of a mass transfer column including a plurality of distributor elements, a plurality of structured packings and a plurality of collector elements according to another embodiment of the present invention.
- Fig. 10: shows a fractal plate according to another embodiment of the present invention.
- Fig. 11: shows a distributor element including a first fractal plate according to another embodiment of the present invention.
- Fig. 12: shows a perspective side view of a distributor element according to another embodiment of the present invention.
- Fig. 13: shows a top view of the distributor element shown in Fig 12.
- Fig. 14a: shows a cross-sectional view of the first level below the first distribution plate of the distributor element shown in Fig. 12.
- Fig. 14b: shows a schematic view of Fig. 14a.
- Fig. 15a: shows a cross-sectional view of the second level below the second distribution plate of the distributor element shown in Fig. 12.
- Fig. 15b: shows a schematic view of Fig. 15a.
- Fig. 16a: shows a cross-sectional view of the third level below the third fractal distribution of the distributor element shown in Fig. 12.
- Fig. 16b: shows a schematic view of Fig. 16a.
- Fig. 17a: shows a cross-sectional view of the fourth level below the fourth distribution plate of the distributor element shown in Fig. 12.
- Fig. 17b: shows a schematic view of Fig. 17a.

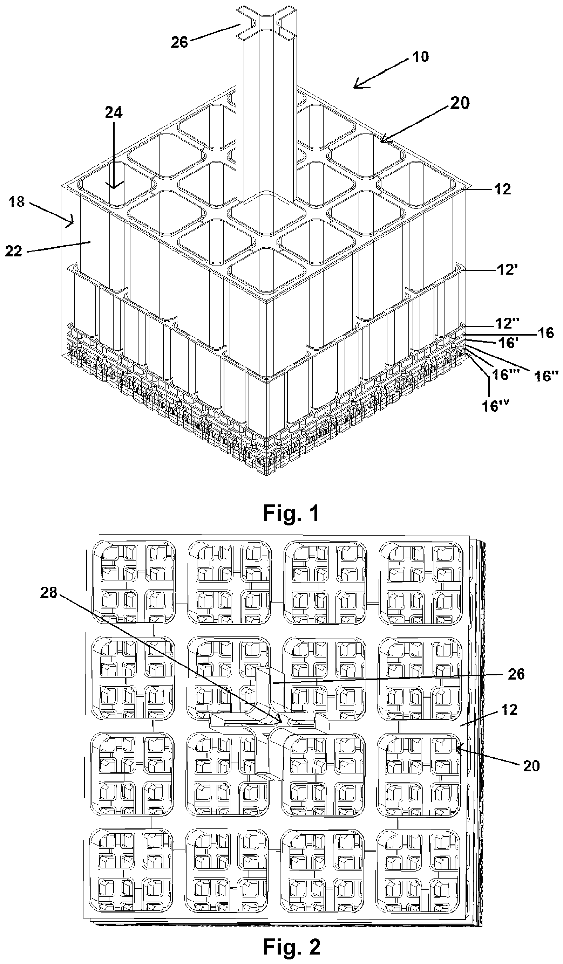

Fig. 1 shows a perspective side view of a distributor element 10 according to one embodiment of the present invention. The distributor element 10 comprises three fractal plates 12, 12', 12" and below the third fractal plate 12‴ five distribution plates 16, 16', 16", 16‴, 16^{iv}. Between each two adjacent plates 12, 12', 12", 16, 16', 16", 16‴,16^{iv}, a level 18 is defined. Each plate 12, 12', 12", 16, 16', 16", 16‴,16^{iv} comprises openings 20, wherein each opening 20 has a square cross-section with rounded edges. Each opening 20 is surrounded by a wall 22 defining in each level 18 below each plate 12, 12', 12", 16, 16', 16", 16‴16^{iv} a channel 24 to be flowed through by the second main fluid. Above the center of the first fractal plate 12, an inlet 26 in the form of a pipe with a substantially cross-shaped cross-section is arranged.

Fig. 2 shows a top view of the distributor element 10 shown in Fig. 1. The uppermost fractal plate 12 comprises sixteen grid-like arranged, at least substantially square openings 20 having rounded edges. Each of the openings 20 has the same size and form, wherein the 16 openings are arranged in the first uppermost fractal plate 12 equidistantly in 4 rows and 4 columns of openings 20. An essentially cross-shaped aperture 28 is arranged in the center of the first fractal plate 12 and is surrounded by an inlet 26 having a corresponding form.

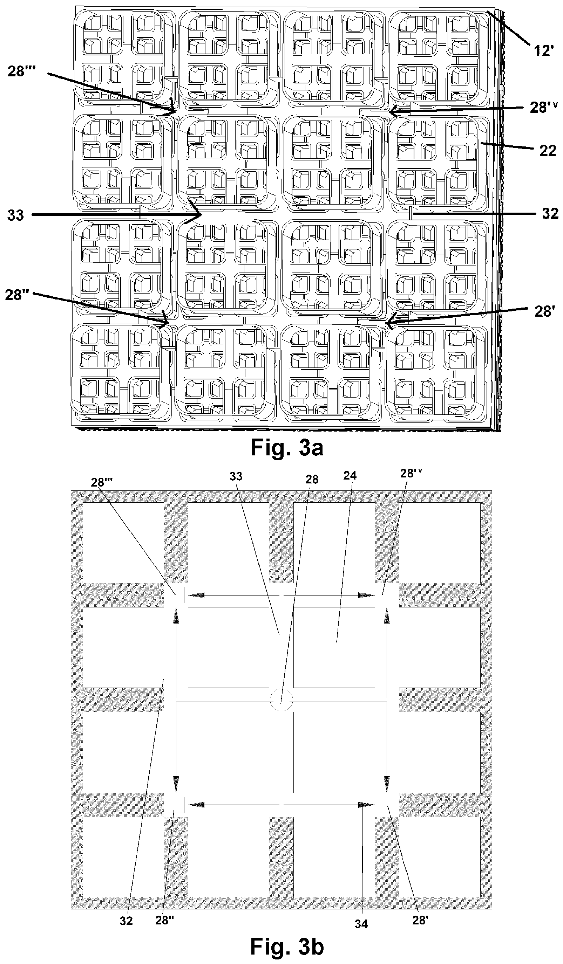

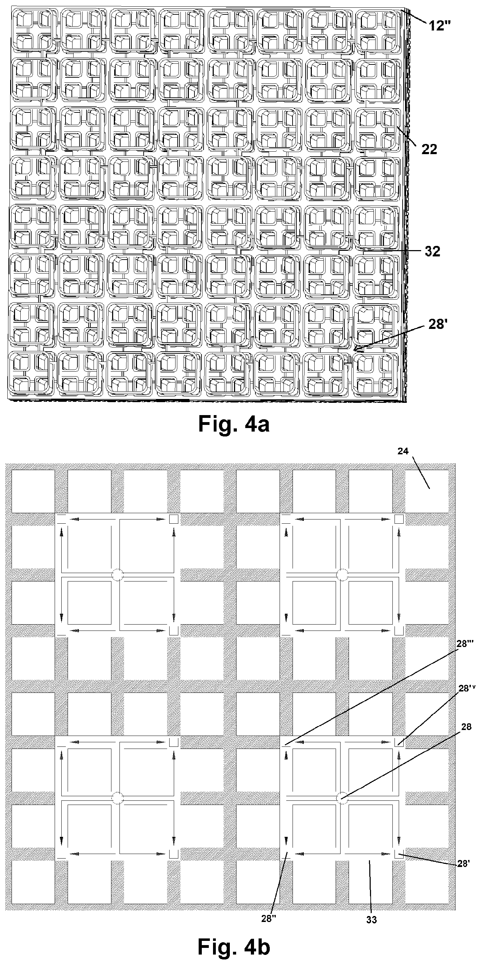

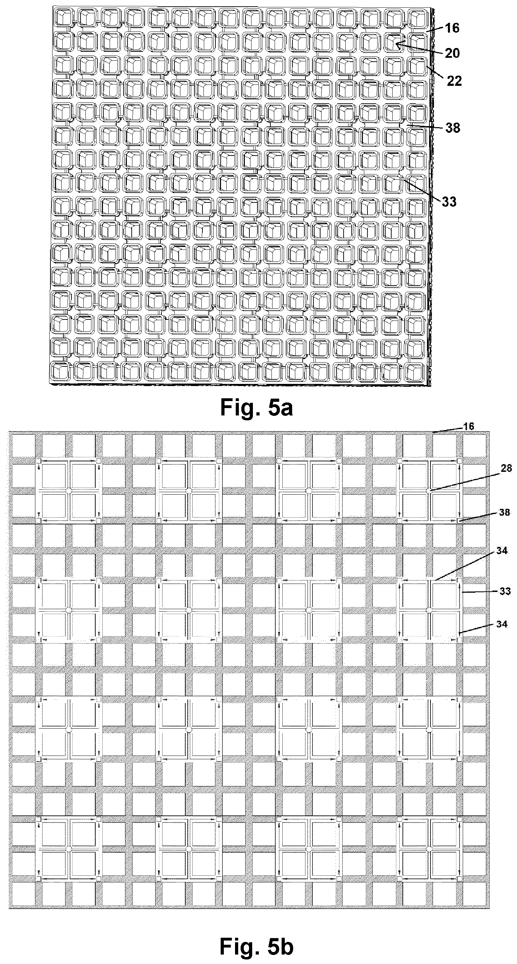

Fig. 3a shows a cross-sectional view of the first level 18 below the first fractal plate 12 and above the second fractal plate 12' of the distributor element 10 shown in Fig. 1, and Fig. 3b shows a schematic view of Fig. 3a. Sixteen channels 24 are located below the openings 20 of the uppermost fractal plate 12, wherein each channel 24 is surrounded by a channel wall 22, which extends from the lower surface of the uppermost first fractal plate 12 onto the upper surface of the second fractal plate 12'. The circle 28 in Fig. 3b schematically shows the location of the aperture 28 formed in the uppermost fractal plate 12, through which the first fluid enters during the operation of the distributor element 10 into the first level 18. Even if the aperture 28 formed in the uppermost fractal plate 12 is, as shown in Fig. 2, essentially cross-shaped, the aperture of the plate 12 being arranged above the level 18 shown in Fig. 3b is shown in Fig. 3b and in the subsequent further schematic Fig. 4b and 5b as circle, in order to show that it is an "incoming aperture", i.e. an aperture, through which liquid flows into the level 18. In contrast thereto, the apertures 28', 28", 28'", 28'^{v} of the plate 12' being arranged below the level 18 shown in Fig. 3b are shown in Fig. 3b and in the subsequent further schematic Fig. 4b, 5b, 6b, 7a, 7c and 7e as rectangular, in order to show that they are "outcoming apertures", i.e. apertures, through which liquid flows into the next lower level. Between some of the channel walls 22, partition walls 32 are arranged, which define a hollow space defining eight fluid paths 33 between and around the four central channels 20 of the first level 18. Each of the eight fluid paths 33 of the first level 18 have at least substantially the same length. The flow direction of the first fluid during the operation of the distributor element 10 in the eight fluid paths 33 defined by in the hollow space is schematically shown by the arrows 34. Those parts of the channels 24, which cannot be flown through by the first fluid due to the partition walls 32 are shown in Fig. 3b shaded or hatched, respectively. Accordingly, during the operation of the distributor element 10 the first fluid entering into the hollow space of the first level 18 through the inlet 26 and the central aperture 28 of the first uppermost fractal plate 12 flows along the eight fluid paths 33 defined in the hollow space between the four central channels 24, during which the first fluid is deflected at the partition walls 32 and is directed to the four apertures 28', 28", 28'", 28^{iv} of the second fractal plate 12', from which it flows downwardly into the second level. Thus, the first fluid is distributed in the first level from one central point 28 via the eight fluid paths 33 formed by the channels 24 and the partition walls 32 and collected in the four apertures 28', 28", 28‴, 28^{iv}. Fig. 4a shows a cross-sectional view of the second level below the second fractal plate 12' and above the third fractal plate 12" of the distributor element 10 shown in Fig. 1, and Fig. 4b shows a schematic view of Fig. 4a. Sixty four channels 24 are located below the openings 20 of the second fractal plate 12', wherein each channel 24 is surrounded by a channel wall 22, which extends from the lower surface of the second fractal plate 12' onto the upper surface of the third fractal plate 12". The four circles 28 schematically show the location of the apertures 28 formed in the second fractal plate 12', through which the first fluid enters during the operation of the distributor element 10 into the second level 18. Again, the apertures 28 of the plate 12' being arranged above the level shown Fig. 4b are shown in Fig. 4b as circle, even if the apertures 28', 28", 28'", 28'^{v} formed in the upper fractal plate 12' are, as shown in Fig. 3a, essentially cross-shaped, in order to show that they are "incoming apertures" 28, i.e. apertures 28, through which liquid flows into the level. In contrast thereto, the apertures 28', 28", 28‴, 28'^{v} of the plate 12" being arranged below the level shown in Fig. 4b are shown in Fig. 4b as rectangular, in order to show that they are "outcoming apertures" 28', 28", 28'", 28'", i.e. apertures 28', 28", 28'", 28'", through which liquid flows into the next lower level. Between some of the channel walls 22, partition walls 32 are arranged, which define 32 fluid paths 33, each fluid path being defined in or by, respectively, the hollow spaces between and around four channels 20 surrounding an aperture 28' of the second fractal plate 12'. The flow direction of the first fluid during the operation of the distributor element 10 is schematically shown by the arrows 34. Again, those parts of the channels 24, which cannot be flown through by the first fluid due to the partition walls 32 are shown in Fig. 4b shaded or hatched, respectively. Accordingly, during the operation of the distributor element 10 the first fluid entering into the second level through the apertures 28 flows along the 32 fluid paths 33 defined in the hollow spaces between the respective channels 24, during which the first fluid is deflected at the partition walls 32 and is directed to the sixteen apertures 28', 28", 28'", 28'^{v} of the third fractal plate 12", from which it flows downwardly into the third level. Thus, the first fluid is distributed in the second level from four apertures 28 to the sixteen apertures 28', 28", 28‴, 28'^{v}.

Fig. 5a shows a cross-sectional view of the third level 18 below the third fractal plate 12" and above the first distribution plate 16 of the distributor element 10 shown in Fig. 1, and Fig. 5b shows a schematic view of Fig. 5a. Two hundred fifty six channels 24 are located below the openings 20 of the third fractal plate 12", wherein each channel 24 is surrounded by a channel wall 22, which extends from the lower surface of the third fractal plate 12" onto the upper surface of the first distribution plate 16. The sixteen circles 28 schematically show the location of the apertures 28', 28", 28‴, 28'^{v} formed in the third fractal plate 12", through which the first fluid enters during the operation of the distributor element 10 into the third level. Again, the apertures 28 of the plate 12" being arranged above the level shown Fig. 5b are shown in Fig. 5b as circle, even if the apertures 28', 28", 28‴, 28'^{v} formed in the upper fractal plate 12" are, as shown in Fig. 4a, essentially cross-shaped, in order to show that they are "incoming apertures" 28, i.e. apertures 28, through which liquid flows into the level. In contrast thereto, the apertures 38 of the distribution plate 16 being arranged below the level shown in Fig. 5b are shown in Fig. 5b as rectangular, in order to show that they are "outcoming apertures" 38, i.e. apertures 38, through which liquid flows into the next lower level. However, in fact, as shown in Fig. 5a, the apertures 38 of the distribution plate 16 as well as those of all lower distribution plates 16', 16", 16‴, 16'" are circular and not, as in the upper fractal plates 12, 12', 12"'essentially cross-shaped. Between some of the channel walls 22, partition walls (not shown in Figures 5a and Fig. 5b) are arranged, which define 128 fluid paths 33, each fluid path 33 being defined or formed, respectively, in the hollow spaces of the third level. The flow direction of the first fluid during the operation of the distributor element 10 is schematically shown by the arrows 34. Again, those parts of the channels 24, which cannot be flown through by the first fluid due to the partition walls 32 are shown in Fig. 5b shaded or hatched, respectively. Accordingly, during the operation of the distributor element 10 the first fluid entering into the third level through the apertures 28 flows along the 128 fluid paths 33 defined in the hollow spaces between the respective channels 24, during which the first fluid is deflected at the partition walls and is directed to the sixty four apertures 38 of the first distribution plate 16, from which it flows downwardly into the fourth level. Thus, the first fluid is distributed in the third level from sixteen apertures 28 to the sixty four apertures 38.

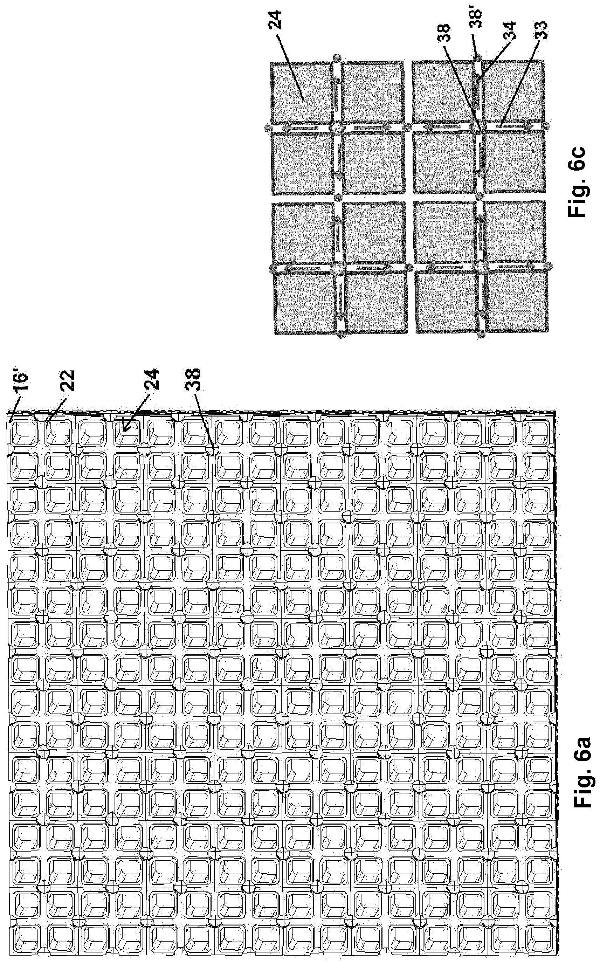

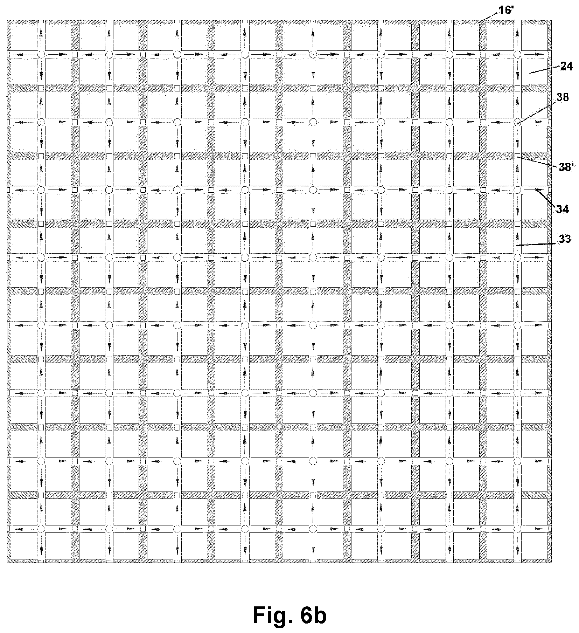

Fig. 6a shows a cross-sectional view of the fourth level below the first distribution plate 16 and above the second distribution plate 16' of the distributor element 10 shown in Fig. 1. Fig. 6b shows a schematic view of Fig. 6a and Fig. 6c shows a part of Fig. 6b magnified. The first distribution plate 16 has the same form and same number and dimensions of openings 20 as the third fractal plate 12", wherein the first distribution plate 16 has no apertures 38 at the crossing-points below those, in which the apertures 28', 28", 28'", 28'^{v} of the third fractal plate 12" are located, but wherein the first distribution plate 16 has apertures 38 at any crossing-point being adjacent to those, in which the apertures 28', 28", 28'", 28'^{v} of the third fractal plate 12" are located. Thereby, during the operation of the distributor element 10 a further distribution of the first fluid is achieved in the fluid paths 33 defined by the hollow space(s) as shown in Fig. 6b and 6c.

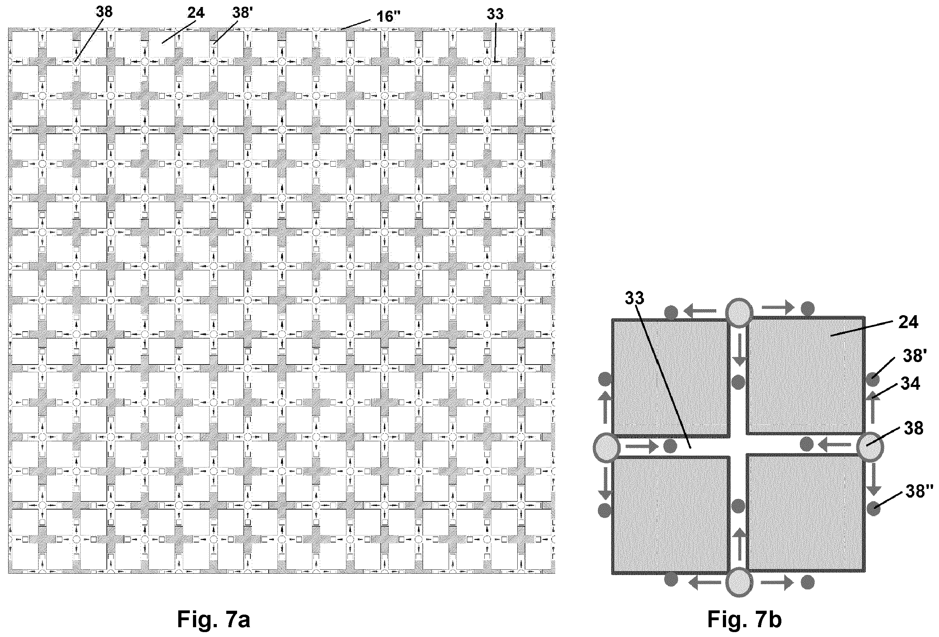

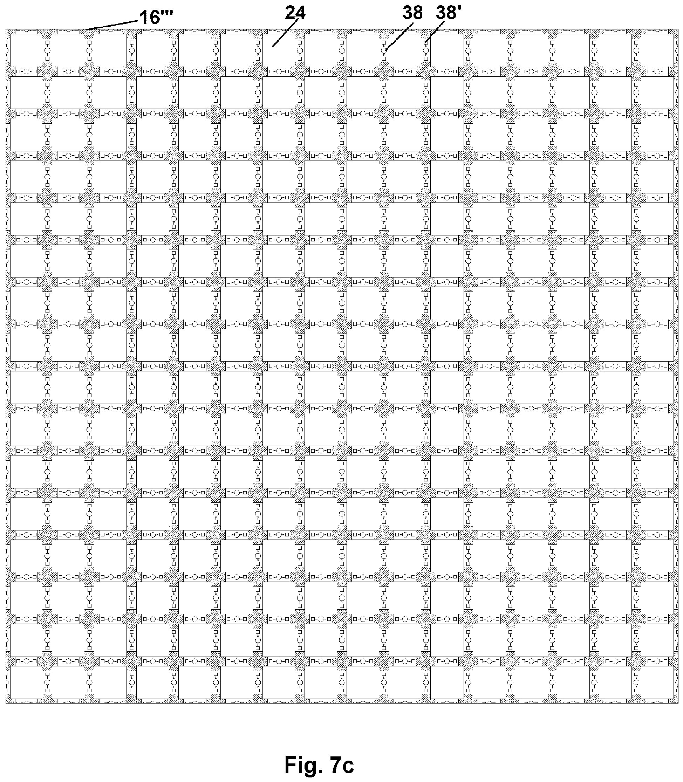

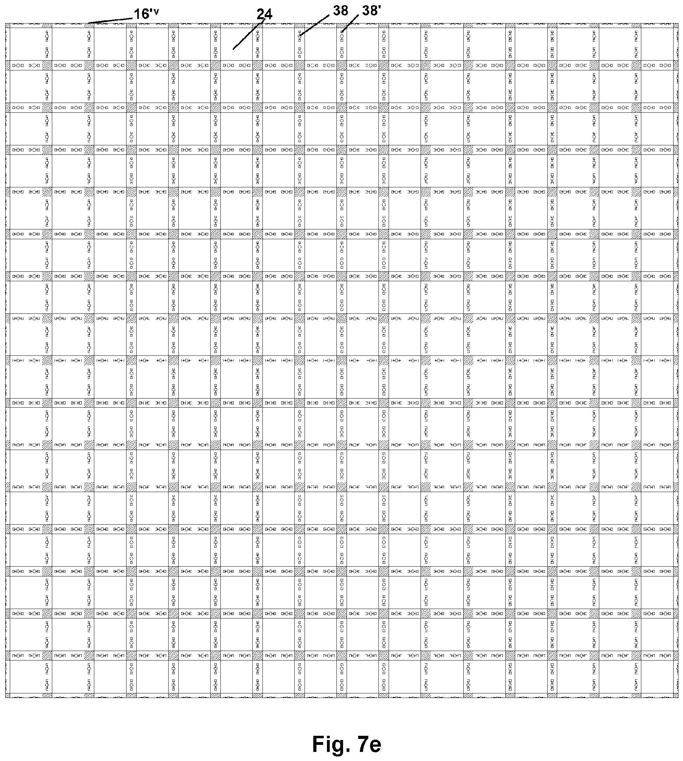

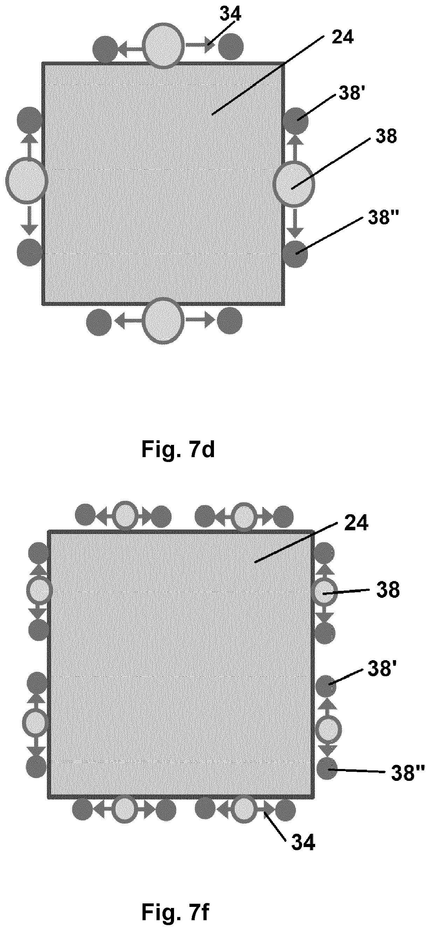

As shown in fig. 7a to 7e, between each adjacent of the four further distribution plates 16', 16", 16‴, 16^{iv} a level is defined. Each of the four further distribution plates 16', 16", 16‴, 16^{iv} has the same form and same number and dimensions of openings 20 as the third fractal plate 12" and the first distribution plate 16. However, each of the further distribution plates 16', 16", 16'", 16^{iv} has a higher number of apertures 38, 38', 38" than its adjacent upper plate 16, 16', 16", 16‴. This allows that any part of the hollow space(s) defining the fluid paths 33 is filled during the operation of the distributor element with the first fluid and thus via the large number of apertures 38, 38', 38" in the lowest of the distribution plates 16^{iv} a particular high distribution density is achieved.

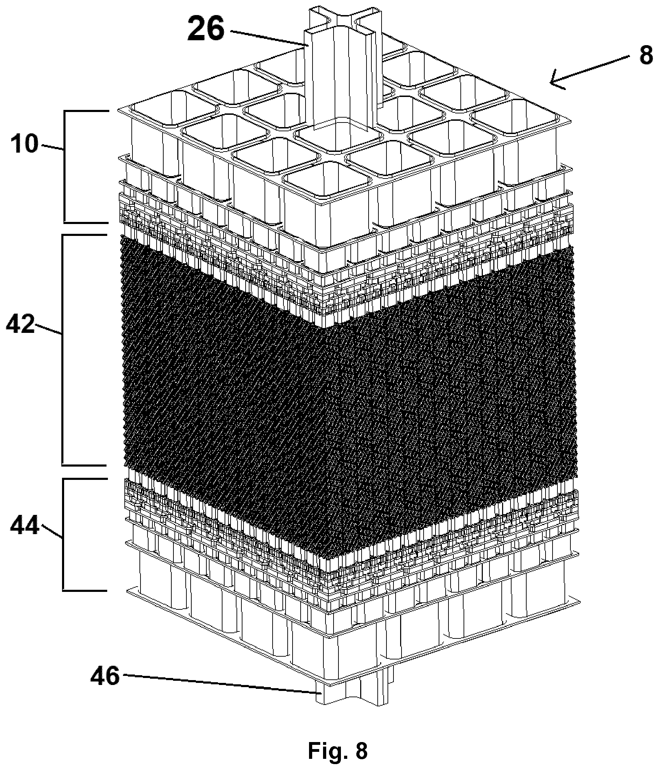

Fig. 8 shows a perspective side view of the internal 40 of a mass transfer column 8 including a distributor element 10, a structed packing 42 and a collector element 44. The mass transfer column 8 may be a rectification column 8. The distributor element 10 is composed as described above and as shown in Fig. 1 to 7. The collector element 44 is composed as the distributor element 10, but simply inverted so that the first fractal plate is the lowest plate and the fifth distribution plate is the uppermost plate. During the operation of the mass transfer column 8, liquid enters the distributor element 10 via the inlet 16 and is distributed over the cross-sectional plane as described above with reference to Fig. 1 to 7. The distributed liquid then flows downwardly onto the surface of the structured packing 42 and further downwards. Gas continuously flows in the counter-direction, i.e. from the bottom of the mass transfer column 8 upwardly. In the structured packing, an intensive mass and energy transfer between the liquid and gas occurs, since both are distributed over the large specific surface area of the structured packing 42. The liquid then flows onto the surface of the collector element 44, in which it is collected and concentrated in one point, from which it leaves the internal via the outlet 46.

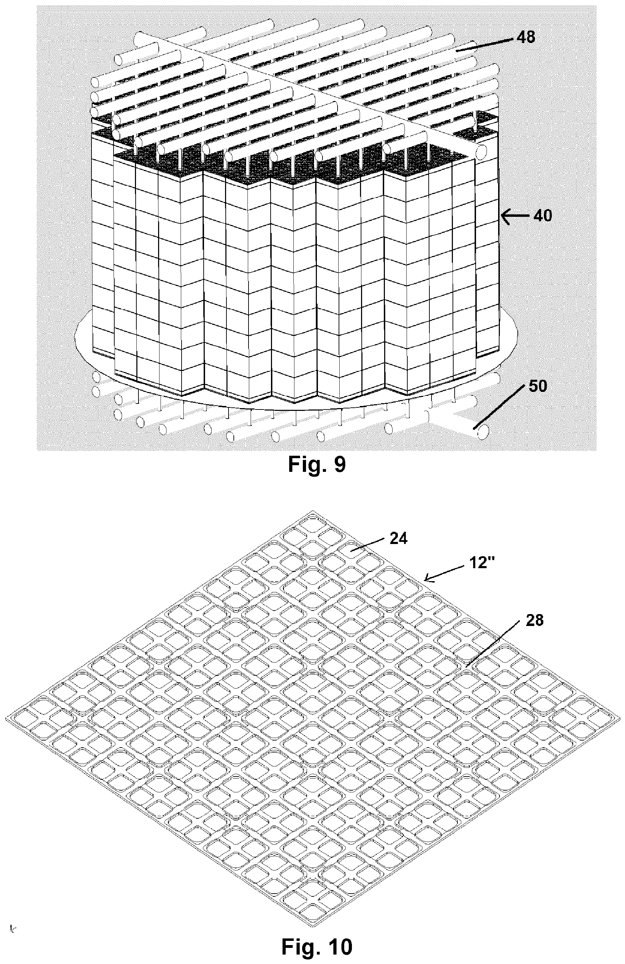

Fig. 9 shows a perspective side view of the internal of a mass transfer column 8 including a plurality of distributor elements 10, a plurality of structured packings 42 and a plurality of collectors elements 44, each of which being composed as described above and as shown in Fig. 8. In order to distribute the first fluid to all of the plurality of distributor elements 10, a distribution manifold 48 is arranged above the plurality of distributor elements 10. Likewise, a collector manifold 50 is arranged below the plurality of collector elements 44.

Fig. 10 shows a fractal plate 12" according to another embodiment of the present invention. The fractal plate 12" is similar to the third fractal plate 12" of the embodiment shown in Fig. 1, 2 and 4 except that the dimensions of the apertures 28 having an essentially cross-shaped cross-section are slightly different.

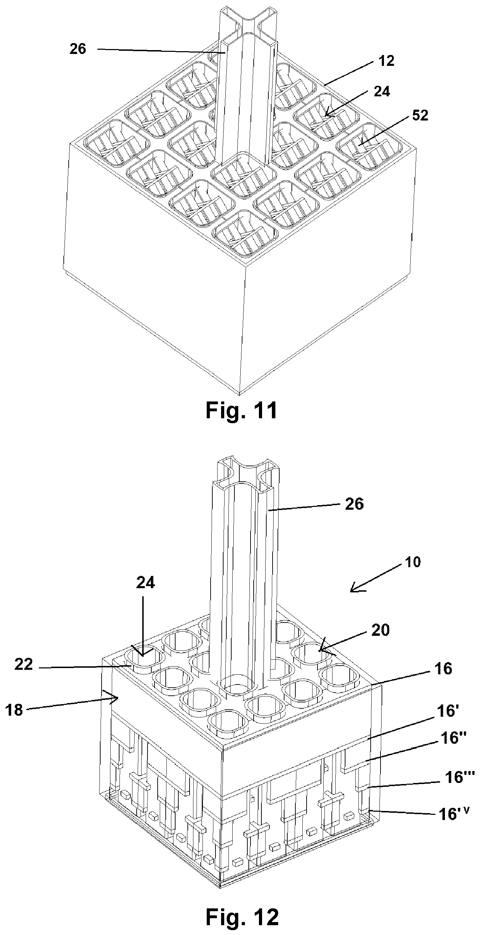

Fig. 11 shows a distributor element including a first fractal plate 12 according to another embodiment of the present invention. The first fractal plate 12 is similar to the first fractal plate 12 of the embodiment shown in Fig. 1 and 2 except that within the channels 24 static mixers 52 are arranged for mixing the second main fluid flowing therethrough during the operation of the distributor element 10.

Fig. 12 shows a perspective side view of a distributor element 10 according to another embodiment of the present invention. The distributor element 10 comprises five distribution plates 16, 16', 16", 16‴, 16^{iv}. Between each two adjacent plates 16, 16', 16", 16‴, 16^{iv}, a level 18 is defined. Each plate 16, 16', 16", 16‴, 16^{iv} comprises openings 20, wherein each opening 20 has a square cross-section with rounded edges. Each opening 20 is surrounded by a wall 22 defining in each level 18 below each plate 16, 16', 16", 16‴, 16^{iv} a channel 24 to be flowed through by the second main fluid. Above the center of the distribution plate 16, an inlet 26 in the form of a pipe with a substantially cross-shaped cross-section is arranged.

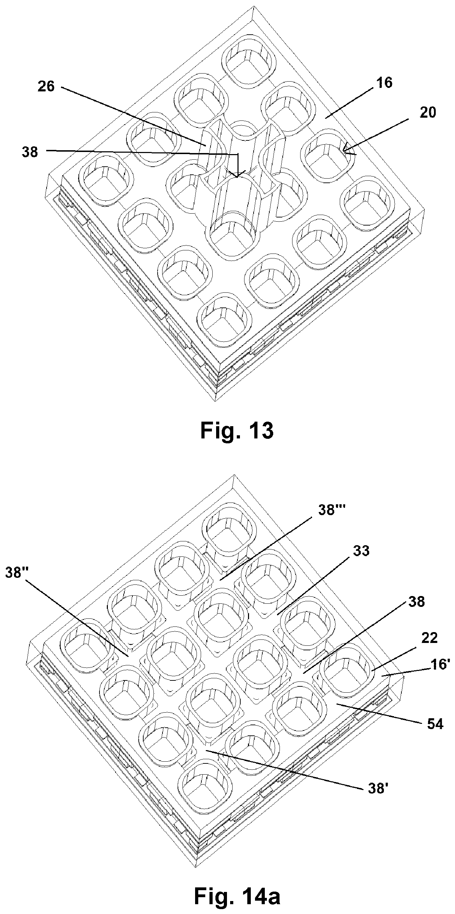

Fig. 13 shows a top view of the distributor element 10 shown in Fig. 12. The uppermost distribution plate 16 comprises sixteen grid-like arranged, at least substantially square openings 20 having rounded edges. Each of the openings 20 has the same size and form, wherein the 16 openings are arranged in the first uppermost distribution plate 16 equidistantly in 4 rows and 4 columns of openings 20. An essentially cross-shaped aperture 38 is arranged in the center of the first distribution plate 16 and is surrounded by an inlet 26 having a corresponding form.

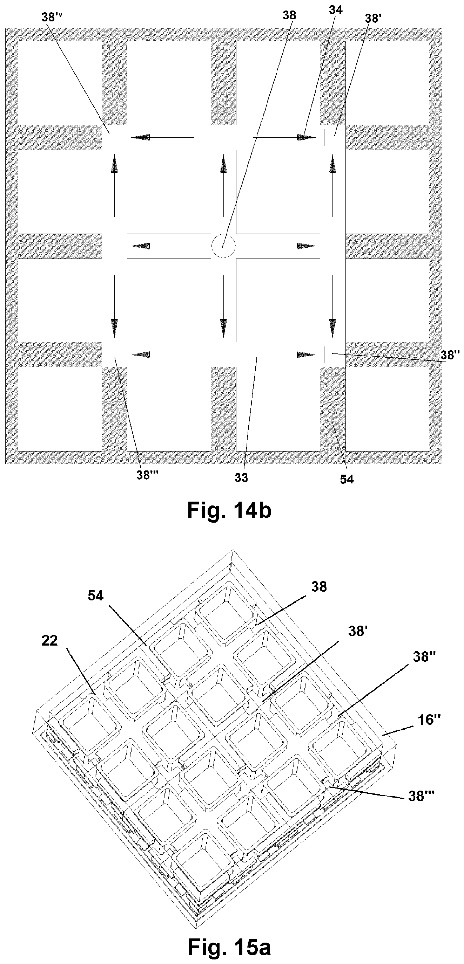

Fig. 14a shows a cross-sectional view of the first level 18 below the first distribution plate 16 and above the second distribution plate 16' of the distributor element 10 shown in Fig. 12, and Fig. 14b shows a schematic view of Fig. 14a. Sixteen channels 24 are located below the openings 20 of the uppermost distribution plate 16, wherein each channel 24 is surrounded by a channel wall 22, which extends from the lower surface of the uppermost first distribution plate 16 onto the upper surface of the second distribution plate 16'. The circle 28 in Fig. 14b schematically shows the location of the aperture 38 formed in the uppermost distribution plate 16, through which the first fluid enters during the operation of the distributor element 10 into the first level 18. Even if the aperture 38 formed in the uppermost distribution plate 16 is, as shown in Fig. 13, essentially cross-shaped, the aperture of the plate 16 being arranged above the level 18 shown in Fig. 14b is shown in Fig. 14b as circle, in order to show that it is an "incoming aperture", i.e. an aperture, through which liquid flows into the level 18. In contrast thereto, the apertures 38', 38", 38‴, 38'^{v} of the plate 16' being arranged below the level 18 shown in Fig. 14b are shown in Fig. 14b as rectangular, in order to show that they are "outcoming apertures", i.e. apertures, through which liquid flows into the next lower level. Actually, the apertures 38', 38", 38'", 38'^{v} of the plate 16' have a substantially cross-shaped cross-section. Some of the hollow spaces 54 formed between the channel walls 22, which are shown in Fig. 14b shaded or hatched, respectively are filled and thus cannot be flowed through by the first fluid. Thereby, eight fluid paths 33 between and around the four central channels 20 of the first level 18 are defined in the remaining hollow space. Each of the eight fluid paths 33 of the first level 18 have at least substantially the same length. The flow direction of the first fluid during the operation of the distributor element 10 in the eight fluid paths 33 defined by in the hollow space is schematically shown by the arrows 34. Accordingly, during the operation of the distributor element 10 the first fluid entering into the hollow space of the first level 18 through the inlet 26 and the central aperture 38 of the first uppermost distribution plate 16 flows along the eight fluid paths 33 defined in the hollow space between the four central channels 24, during which the first fluid is deflected at the walls of the filled 54 hollow spaces 54 and is directed to the four apertures 38', 38", 38‴, 38^{iv} of the second distribution plate 16', from which it flows downwardly into the second level. Thus, the first fluid is distributed in the first level 18 from one central point 38 via the eight fluid paths 33 formed by the channels 24 and the walls of the filled hollow space 54 and collected in the four apertures 38', 38", 38‴, 48^{iv}.

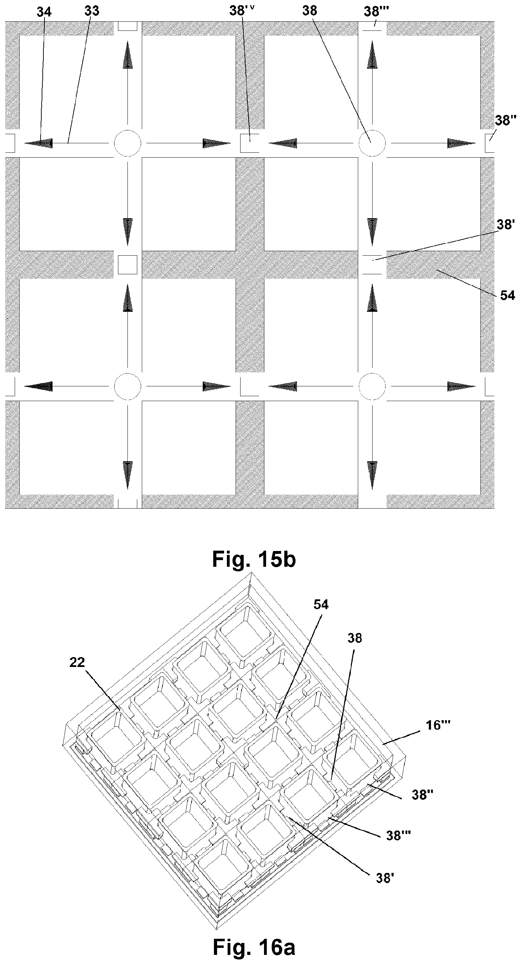

Fig. 15a shows a cross-sectional view of the second level below the second distribution plate 16' and above the third distribution plate 16" of the distributor element 10 shown in Fig. 12, and Fig. 15b shows a schematic view of Fig. 15a. The openings 20 and channels 24 of the second distribution plate 16' are located at the same locations and have the same dimensions as those of the first distribution plate 16. Thus, sixteen channels 24 are located below the openings 20 of the second distribution plate 16', wherein each channel 24 is surrounded by a channel wall 22, which extends from the lower surface of the second distribution plate 16' onto the upper surface of the third distribution plate 16". The four circles 38 schematically show the location of the apertures 38 formed in the second distribution plate 16', through which the first fluid enters during the operation of the distributor element 10 into the second level. Even if the apertures 38 formed in the second distribution plate 16' are, as shown in Fig. 14a, essentially cross-shaped, the apertures of the plate 16' being arranged above the level shown in Fig. 15b are shown in Fig. 15b as circle, in order to show that they are "incoming apertures", i.e. apertures, through which liquid flows into the second level. The third distribution plate 16" arranged below the second level comprises twelve apertures 38', 38", 38'", 38'", which are shown in Fig. 15b as rectangular, in order to show that they are "outcoming apertures" 38', 38", 38'", 38'", i.e. apertures 38', 38", 38'", 38'", through which liquid flows into the next lower level. Actually, the twelve apertures 38', 38", 38‴, 38'^{v} of the third distribution plate 16" have a circular cross-section, as shown in Fig. 15a. Some of the hollow spaces 54 formed between the channel walls 22, which are shown in Fig. 15b shaded or hatched, respectively are filled and thus cannot be flowed through by the first fluid. Thereby, sixteen fluid paths 33 between and around the channels 20 of the second level are defined in the remaining hollow space. The flow direction of the first fluid during the operation of the distributor element 10 is schematically shown by the arrows 34. Accordingly, during the operation of the distributor element 10 the first fluid entering into the second level through the apertures 38 flows along the 16 fluid paths 33 defined in the hollow spaces between the respective channels 24, during which the first fluid is deflected at the walls 32 of the filled hollow space 54 and is directed to the twelve apertures 38', 38", 38‴, 38'^{v} of the third distribution plate 16", from which it flows downwardly into the third level. Thus, the first fluid is distributed in the second level from four apertures 38 to the twelve apertures 38', 38", 38‴, 38'^{v}.

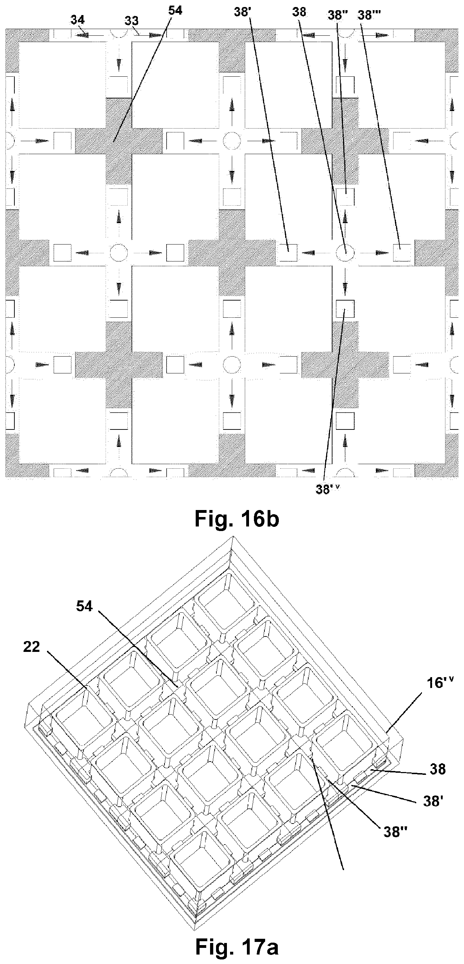

Fig. 16a shows a cross-sectional view of the third level below the third distribution plate 16" and above the fourth distribution plate 16‴ of the distributor element 10 shown in Fig. 12, and Fig. 16b shows a schematic view of Fig. 16a. The openings 20 and channels 24 of the fourth distribution plate 16‴ are located at the same locations and have the same dimensions as those of the first, second and third distribution plates 16, 16', 16". Thus, sixteen channels 24 are located below the openings 20 of the third distribution plate 16", wherein each channel 24 is surrounded by a channel wall 22, which extends from the lower surface of the third distribution plate 16" onto the upper surface of the fourth distribution plate 16‴. The twelve circles 28 schematically show the location of the apertures 38', 38", 38'", 38'^{v} formed in the third distribution plate 16", through which the first fluid enters during the operation of the distributor element 10 into the third level. The fourth distribution plate 16‴ arranged below the third level comprises forty apertures 38', 38", 38'", 38'", which are shown in Fig. 16b as rectangular, in order to show that they are "outcoming apertures" 38', 38", 38‴, 38'", i.e. apertures 38', 38", 38‴, 38'", through which liquid flows into the next lower level. Actually, the forty apertures 38', 38", 38‴, 38'^{v} of the fourth distribution plate 16‴ have the form of a long rectangular, as shown in Fig. 16a. Some of the hollow spaces 54 formed between the channel walls 22, which are shown in Fig. 16b shaded or hatched, respectively are filled and thus cannot be flowed through by the first fluid. Thereby, forty fluid paths 33 between and around the channels 20 of the third level are defined in the remaining hollow space. The flow direction of the first fluid during the operation of the distributor element 10 is schematically shown by the arrows 34. Accordingly, during the operation of the distributor element 10 the first fluid entering into the third level through the apertures 38 flows along the 40 fluid paths 33 defined in the hollow spaces between the respective channels 24, during which the first fluid is deflected at the walls 32 of the filled hollow space 54 and is directed to the forty apertures 38', 38", 38‴, 38'^{v} of the fourth distribution plate 16‴, from which it flows downwardly into the fourth level. Thus, the first fluid is distributed in the third level from twelve apertures 38 to the forty apertures 38', 38", 38'", 38'^{v}.

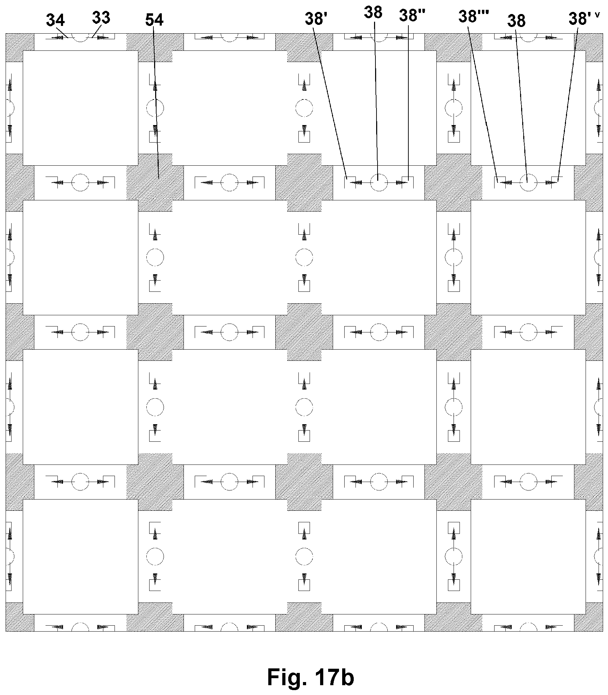

Fig. 17a shows a cross-sectional view of the fourth level below the fourth distribution plate 16‴ and above the fifth distribution plate 16'" of the distributor element 10 shown in Fig. 12, and Fig. 17b shows a schematic view of Fig. 17a. The openings 20 and channels 24 of the fifth distribution plate 16'" are located at the same locations and have the same dimensions as those of the first, second, third and fourth distribution plates 16, 16', 16", 16‴. Thus, sixteen channels 24 are located below the openings 20 of the fourth distribution plate 16'", wherein each channel 24 is surrounded by a channel wall 22, which extends from the lower surface of the fourth distribution plate 16‴ onto the upper surface of the fifth distribution plate 16'^{v}. The forty circles 28 schematically show the location of the apertures 38', 38", 38'", 38'^{v} formed in the fourth distribution plate 16‴, through which the first fluid enters during the operation of the distributor element 10 into the fourth level. Even if the apertures 38 formed in the fourth distribution plate 16‴ have, as shown in Fig. 16a, the form of a long rectangular, the apertures of the plate 16‴ being arranged above the level shown in Fig. 17b are shown in Fig. 17b as circle, in order to show that they are "incoming apertures", i.e. apertures, through which liquid flows into the second level. The fifth distribution plate 16'" arranged below the fourth level comprises 82 apertures 38', 38", 38'", 38'", which are shown in Fig. 17b as rectangular, in order to show that they are "outcoming apertures" 38', 38", 38‴, 38'", i.e. apertures 38', 38", 38'", 38'", through which liquid flows into the next lower level. Actually, the 82 apertures 38', 38", 38'", 38'^{v} of the fifth distribution plate 16'" have the form of a long rectangular, as shown in Fig. 17a. Some of the hollow spaces 54 formed between the channel walls 22, which are shown in Fig. 17b shaded or hatched, respectively are filled and thus cannot be flowed through by the first fluid. Thereby, 82 fluid paths 33 between and around the channels 20 of the fourth level are defined in the remaining hollow space. The flow direction of the first fluid during the operation of the distributor element 10 is schematically shown by the arrows 34. Accordingly, during the operation of the distributor element 10 the first fluid entering into the fourth level through the apertures 38 flows along the 82 fluid paths 33 defined in the hollow spaces between the respective channels 24, during which the first fluid is deflected at the walls 32 of the filled hollow space 54 and is directed to the 82 apertures 38', 38", 38'", 38'^{v} of the fifth distribution plate 16'", from which it flows downwardly. Thus, the first fluid is distributed in the fourth level from forty apertures 38 to the 82 apertures 38', 38", 38'", 38'^{v}.

### Reference Numerals

- 8: Mass transfer column
- 10: Distributor element
- 12, 12', 12": Fractal plate
- 16, 16', 16", 16‴, 16^{iv}: Distribution plate
- 18: Level
- 20: Opening
- 22: Channel wall
- 24: Channel
- 26: Inlet
- 28, 28', 28", 28‴, 28^{iv}: Aperture of fractal plate
- 32: Partition wall
- 33: Fluid path
- 34: Flow direction of the first fluid in the fluid path
- 38, 38', 38", 38'", 38'^{v}: Aperture of distribution plate
- 40: Internal of a mass transfer column
- 42: Structured packing
- 44: Collector element
- 46: Outlet
- 48: Distribution manifold
- 50: Collector manifold
- 52: Static mixer
- 54: Filled hollow space

## Claims

1. A distributor element (10) for uniformly distributing a first fluid on a cross-sectional plane or collector element (10) for collecting a first fluid being distributed on a cross-sectional plane, wherein a second main fluid flows in co-current flow and/or in counter-current flow with regard to the first fluid through the distributor element (10), wherein the distributor element (10) comprises at least three plates (12, 12', 12", 16, 16', 16", 16‴, 16^{iv}) being arranged at least substantially parallel to each, wherein a level (18) is defined between each of two adjacent plates (12, 12', 12", 16, 16', 16", 16‴, 16^{iv}), wherein each of the plates (12, 12', 12", 16, 16', 16", 16‴, 16^{iv}) comprises a number of openings (20), wherein in each of the levels (18) walls (22) are arranged, each of which extending from one side of a plate (12, 12', 16, 16', 16", 16‴) onto the adjacent side of an adjacent plate (12', 12", 16, 16', 16", 16‴, 16^{iv}) such that each wall (22) defines a channel (24) to be flowed through by the second main fluid, wherein the channels (24) fluid-tightly connect all openings (20) between adjacent plates (12, 12', 12", 16, 16', 16", 16‴, 16^{iv}), wherein in each of the levels (18, 18) between the walls (22) defining the channels (24) one or more hollow spaces (33) are formed, through which the first fluid may flow, wherein each of the plates (12, 12', 12", 16, 16', 16", 16‴, 16^{iv}) comprises at least one aperture (28, 28', 28", 28‴, 28^{iv}, 38, 38', 38", 38‴, 38'^{v}) not being fluid-tightly connected with one or more openings (20) of an adjacent plate (12, 12', 12", 16, 16', 16", 16‴, 16^{iv}) by a channel (24) and being arranged adjacent to the one or more hollow spaces (33) of the adjacent level(s) (18) so that in each level (18) between the apertures (28, 28', 28", 28‴, 28^{iv}, 38, 38', 38", 38'", 38'^{v}) of the adjacent plates (12, 12', 12", 16, 16', 16", 16‴, 16^{iv}) at least two fluid paths (33) extend in the one or more hollow spaces (33) of the level (18), wherein all of the at least two fluid paths (33) of each level (18) have substantially the same length, wherein the number of fluid paths (33) increases, seen in the direction from one outermost plate (12, 16) to the opposite outermost plate (16^{iv}) of the distributor or collector element (10), at least for 75% of the plates (12, 12', 12") from level to level, and, wherein the channels (24) to be flowed through by the second main fluid are fluid-tightly separated by the walls (22) from all of the one or more hollow spaces(33) defining the fluid paths (33), through which the first fluid may flow.

2. The distributor or collector element (10) in accordance with claim 1, wherein the number of fluid paths (33) increases, seen in the direction from the first outermost plate (12, 16) to the opposite outermost plate (16^{iv}) of the distributor or collector element (10), at least for 80%, more preferably for at least for 90%, even more preferably for at least for 95%, still more preferably for at least for 98% and most preferably for all of the plates from level (18) to level.

3. The distributor or collector element (10) in accordance with claim 1 or 2, wherein, seen in the direction from the first outermost plate (12, 16) to the opposite outermost plate (16^{iv}) of the distributor or collector element (10), the number of channels (24) increases from level (18) to level and/or wherein, seen in the direction from the first outermost plate (12, 16) to the opposite outermost plate (16^{iv}) of the distributor or collector element (10), the number of apertures (28, 28', 28", 28‴, 28^{iv}, 38, 38', 38", 38‴, 38'^{v}) of a plate (12') increases from level (18) to level.

4. The distributor or collector element (10) in accordance with any of the preceding claims, wherein the lengths of all fluid paths (33) extending from an aperture of the first outermost plate (12, 16) to an aperture of the opposite outermost plate (16^{iv}) of the distributor or collector element (10) are at least substantially the same.

5. The distributor or collector element (10) in accordance with any of the preceding claims, wherein all of the openings (20) of each of the at least three plates (12, 12', 12", 16, 16', 16", 16‴, 16^{iv}) are at least substantially regularly arranged in each of the at least three plates (12, 12', 12", 16, 16', 16", 16‴, 16^{iv}), wherein each of the distances between the center point of one opening (20) and the center point of the closest adjacent opening (20) of at least one and preferably of each of the at least three plates (12, 12', 12", 16, 16', 16", 16‴, 16^{iv}) is 80 to 120% of the average distance of the center points of all openings (20) and their closest adjacent openings (20) of the respective plate (12, 12', 12", 16, 16', 16", 16‴, 16^{iv}), wherein the average distance of the center point of all openings (20) with their closest adjacent opening (20) of the respective plate (12, 12', 12") is determined by measuring the distances between the center points of each opening (20) and the center point of its closest opening (20) of the plate (12, 12', 12", 16, 16', 16", 16‴, 16^{iv}), by summing up all these measured distances of the plate (12, 12', 12", 16, 16', 16", 16‴, 16^{iv}) and by dividing the sum by the number of openings (20) of the plate (12, 12', 12", 16, 16', 16", 16‴, 16^{iv}).

6. The distributor or collector element (10) in accordance with any of the preceding claims, wherein the openings (20) of each of the at least three plates (12, 12', 12", 16, 16', 16", 16‴, 16^{iv}) are at least substantially grid-like arranged in each of the at least three plates (12, 12', 12", 16, 16', 16", 16'", 16^{iv}), wherein the openings (20) of each of the at least three plates (12, 12', 12", 16, 16', 16", 16‴, 16^{iv}) are arranged in the respective plate (12, 12', 12", 16, 16', 16", 16‴, 16^{iv}) in (2)^{m} rows and (2)^{m} columns, wherein m is an integer of 1 to 10, preferably of 1 to 8 and more preferably of 2 to 6.

7. The distributor or collector element (10) in accordance with any of the preceding claims, wherein all of the apertures (28, 28', 28", 28'", 28^{iv}, 38, 38', 38", 38‴, 38'^{v}) of each of the at least three plates (12, 12', 12", 16, 16', 16", 16‴, 16^{iv}) are at least substantially regularly arranged in each of the at least three plates (12, 12', 12", 16, 16', 16", 16‴, 16^{iv}), wherein each of the distances between the center point of one aperture (28, 28', 28", 28'", 28^{iv}, 38, 38', 38", 38'", 38'^{v}) and the center point of the closest adjacent aperture (28, 28', 28", 28'", 28^{iv}, 38, 38', 38", 38‴, 38'^{v}) of each of the at least three plates (12, 12', 12", 16, 16', 16", 16‴, 16^{iv}) is 80 to 120% of the average distance of the center points of all apertures (28, 28', 28", 28'", 28^{iv}, 38, 38', 38", 38‴, 38'^{v}) and their closest adjacent apertures (28, 28', 28", 28‴, 28^{iv}, 38, 38', 38", 38'", 38'^{v}) of the respective plate (12, 12', 12", 16, 16', 16", 16‴, 16^{iv}), wherein the average distance of the center points of all apertures (28, 28', 28", 28'", 28^{iv}, 38, 38', 38", 38‴, 38'^{v}) with their closest adjacent apertures (28, 28', 28", 28‴, 28^{iv}, 38, 38', 38", 38‴, 38'^{v}) of the respective plate (12, 12', 12", 16, 16', 16", 16‴, 16^{iv}) is determined by measuring the distances between the center point of each aperture (28, 28', 28", 28‴, 28^{iv}, 38, 38', 38", 38‴, 38'^{v}) and the center point of its closest aperture (28, 28', 28", 28'", 28^{iv}, 38, 38', 38", 38'", 38'^{v}) of the plate (12, 12', 12", 16, 16', 16", 16‴, 16^{iv}), by summing up all these measured distances of the plate (12, 12', 12", 16, 16', 16", 16‴, 16^{iv}) and by dividing the sum by the number of apertures (28, 28', 28", 28‴, 28^{iv}, 38, 38', 38", 38'", 38'^{v}) of the plate (12, 12', 12", 16, 16', 16", 16'", 16^{iv}).

8. The distributor or collector element (10) in accordance with any of the preceding claims, which comprises 2 to 15 fractal plates (12, 12', 12"), wherein each of the fractal plates (12, 12', 12") comprises a lower number of openings (20) than a fractal plate (12', 12") being adjacent in the direction from the first outermost (12) to the opposite outermost fractal plate (12ⁱⁱ) of the distributor or collector element (10), wherein all fractal plates (12, 12', 12") are adjacent to each other, with the first fractal plate (12) being the first outermost plate (12) of the distributor element (10), wherein the number of openings (20) in each fractal plate (12, 12', 12") is 4 × (4)", wherein n is the number of the respective fractal plate (12, 12', 12") in relation to the first outermost fractal plate (12), with the first outermost fractal plate (12) being fractal plate 1.

9. The distributor or collector element (10) in accordance with any of the preceding claims, wherein at least one of the at least three plates (12, 12', 12", 16, 16', 16", 16‴, 16^{iv}) is a distribution plate (16, 16', 16", 16'", 16^{iv}), wherein each of the at least one distribution plates (16, 16', 16", 16‴, 16^{iv}) comprises the same number of openings (20) as a plate (12", 16, 16', 16", 16‴) being adjacent in the direction being opposite to the direction from the first outermost (12) to the opposite outermost plate (16^{iv}) of the distributor or collector element (10), and, if no such adjacent plate is present, the same number of openings (20) as a plate (16^{iv}) being adjacent in the direction from the first outermost (12) to the opposite outermost plate (16^{iv}) of the distributor or collector element (10).

10. The distributor or collector element (10) in accordance with claim 9, wherein each of the at least one distribution plates (16, 16', 16", 16‴, 16^{iv}) has the same form as a plate (12",16, 16', 16", 16‴) being adjacent in the direction being opposite to the direction from the first outermost (12) to the opposite outermost plate (16^{iv}) and, if no such adjacent plate is present, the same form as a plate (16^{iv}) being adjacent in the direction from the first outermost (12) to the opposite outermost plate (16^{iv}), and wherein the openings (20) are formed in each of the at least one distribution plate (16, 16', 16", 16‴, 16^{iv}) at the same locations as in a plate (12",16, 16', 16", 16‴) being adjacent in the direction being opposite to the direction from the first outermost (12) to the opposite outermost plate (16^{iv}) and, if no such adjacent plate (12",16, 16', 16", 16‴) is present, at the same locations as in a plate (12",16, 16', 16", 16‴) being adjacent in the direction from the first outermost (12) to the opposite outermost plate (16^{iv}).

11. The distributor or collector element (10) in accordance with claim 9 or 10, which comprises 1 to 3 and preferably 2 or 3 distribution plates (16, 16', 16", 16‴, 16^{iv}), wherein each of the distribution plates (16, 16', 16", 16‴, 16^{iv}) has a higher number of apertures (38, 38', 38", 38‴, 38^{iv}) than a plate (12",16, 16', 16", 16‴) being adjacent in the direction being opposite to the direction from the first outermost (12) to the opposite outermost plate (16^{iv}), if present.

12. The distributor or collector element (10) in accordance with any of claims 1 to 8, which comprises only fractal plates (12, 12', 12"), namely 3 to 15 fractal plates (12, 12', 12").

13. The distributor or collector element (10) in accordance with any of claims 1 to 7 and 9 to 12, which comprises only distribution plates (16, 16', 16", 16‴, 16^{iv}), namely 3 to 10 distribution plates (16, 16', 16", 16‴, 16^{iv}).

14. The distributor or collector element (10) in accordance with any of claims 1 to 11, which comprises at least one fractal plate (12, 12', 12") and at least one distribution plate (16, 16', 16", 16‴, 16^{iv}), wherein all of the at least one distribution plates (16, 16', 16", 16‴, 16^{iv}) are arranged, seen in the direction from the first outermost (12, 16) to the opposite outermost plate (16^{iv}) of the distributor or collector element (10), behind all of the at least one fractal plate (12, 12', 12").

15. An apparatus comprising one or more distributor elements (10) in accordance with any of the preceding claims and/or one or more collector elements (10) in accordance with any of the preceding claims, wherein:
i) the apparatus is a mass transfer column (8), a mixer, a disperser, a foaming device, a chemical reactor, a crystallizer or an evaporator, or
ii) the apparatus is a mass transfer column (8) and comprises below the one or more distributor elements (10) and/or above the one or more collector elements (10) a mass transfer structure, which is selected from the group consisting of contact trays, random packings and structured packings (42), or
iii) the apparatus is a mass transfer column (8) and comprises below the one or more distributor elements (10) and/or above the one or more collector elements (10) a mass transfer structure, which has a honeycomb shape including capillaries, wherein the walls (22) defining the channels (24) are step-shaped or made of tissue or are arbitrarily formed open-cell foams, or
iv) the apparatus comprises below the one or more distributor elements (10) and/or above the one or more collector elements (10) a mass transfer structure, which comprises a contact zone, which contact zone is designed to conduct a second fluid, and whereby in the contact zone the first fluid can be brought into contact with the second fluid, wherein in the contact zone at least one flow breaker is provided for interrupting a flow of the second fluid, or
v) the apparatus comprises below the one or more distributor elements (10) and/or above the one or more collector elements (10) a mass transfer structure, which is selected from the group consisting of tissues, open-pored materials, capillaries, step structures and arbitrary combinations of two or more of the aforementioned structures.

16. Use of a distributor element (10) in accordance with any of any of the preceding claims for uniformly distributing a first fluid on a cross-sectional plane and/or of a collector element (10) in accordance with any of the preceding claims for collecting a first fluid being distributed on a cross-sectional plane comprising the step of flowing a first fluid into at least one of the one or more hollow spaces defining the fluid paths and flowing a second fluid through the channels of the distributor and/ element, wherein preferably the distributor and/ element is used in a mass transfer column (8), a mixer, a disperser, a foaming device or a chemical reactor.

## Patentansprüche

1. Verteilerelement (10) zum gleichmäßigen Verteilen eines ersten Fluids auf einer Querschnittsebene oder Kollektorelement (10), das auf einer Querschnittsebene verteiltes erstes Fluid sammelt, wobei ein zweites Hauptfluid im Gleichstrom und/oder im Gegenstrom in Bezug auf das erste Fluid durch das Verteilerelement (10) strömt, wobei das Verteilerelement (10) mindestens drei Platten (12, 12', 12", 16, 16', 16", 16‴, 16^{iv}) umfasst, die zumindest im Wesentlichen parallel zu jeder angeordnet sind, wobei eine Ebene (18) zwischen jeder von zwei benachbarten Platten (12, 12', 12", 16, 16', 16", 16‴, 16^{iv}) definiert ist, wobei jede der Platten (12, 12', 12", 16, 16', 16", 16‴, 16^{iv}) eine Anzahl von Öffnungen (20) umfasst, wobei in jeder der Ebenen (18) Wände (22) angeordnet sind, die sich jeweils von einer Seite einer Platte (12, 12', 16, 16', 16", 16‴) auf die benachbarte Seite einer benachbarten Platte (12', 12", 16, 16', 16", 16‴, 16^{iv}) erstrecken, sodass jede Wand (22) einen Kanal (24) definiert, der durch das zweite Hauptfluid durchströmt wird, wobei die Kanäle (24) fluiddicht alle Öffnungen (20) zwischen benachbarten Platten (12, 12', 12", 16, 16', 16", 16‴, 16^{iv}) verbinden, wobei in jeder der Ebenen (18, 18) zwischen den Wänden (22), die Kanäle (24) definieren, ein oder mehrere Hohlräume (33) gebildet werden, durch die das erste Fluid strömen kann, wobei jede der Platten (12, 12', 12", 16, 16', 16", 16‴, 16^{iv}) mindestens eine Öffnung (28, 28', 28", 28‴, 28^{iv}, 38, 38', 38", 38‴, 38'^{v}) umfasst, die nicht fluiddicht durch einen Kanal (24) mit einer oder mehreren Öffnungen (20) einer benachbarten Platte (12, 12', 12", 16,16', 16", 16‴, 16^{iv}) verbunden ist oder benachbart zu dem einen oder den mehreren Hohlräumen (33) der benachbarten Ebene(n) (18) angeordnet ist, sodass sich in jeder Ebene (18) zwischen den Öffnungen (28, 28', 28", 28'", 28^{iv}, 38, 38', 38", 38‴, 38'^{v}) der benachbarten Platten (12, 12', 12", 16, 16', 16", 16‴, 16^{iv}) mindestens zwei Fluidwege (33) in den einen oder die mehreren Hohlräume (33) der Ebene (18) erstrecken, wobei alle der mindestens zwei Fluidwege (33) jeder Ebene (18) im Wesentlichen die gleiche Länge haben, wobei die Anzahl der Fluidwege (33) sich erhöht, gesehen in der Richtung von einer äußersten Platte (12, 16) zur gegenüberliegenden äußersten Platte (16^{iv}) des Verteiler- oder Kollektorelements (10), mindestens für 75 % der Platten (12, 12', 12") von Ebene zu Ebene, und wobei die Kanäle (24), die von dem zweiten Hauptfluid zu durchströmen sind, fluiddicht durch die Wände (22) von allen des einen oder der mehreren Hohlräume (33) getrennt sind, die die Fluidwege (33) definieren, durch die das erste Fluid strömen kann.

2. Verteiler- oder Kollektorelement (10) nach Anspruch 1, wobei die Anzahl von Fluidwegen (33), gesehen in Richtung von der ersten äußersten Platte (12, 16) zu der gegenüberliegenden äußersten Platte (16^{iv}) des Verteiler- oder Kollektorelements (10), mindestens für 80 %, mehr bevorzugt für mindestens für 90 %, noch mehr bevorzugt mindestens für 95 %, noch mehr bevorzugt mindestens für 98 % und am meisten bevorzugt für alle Platten von Ebene (18) zu Ebene zunimmt.

3. Verteiler- oder Kollektorelement (10) nach Anspruch 1 oder 2, wobei, gesehen in der Richtung von der ersten äußersten Platte (12, 16) zu der gegenüberliegenden äußersten Platte (16^{iv}) des Verteiler- oder Kollektorelements (10), die Anzahl der Kanäle (24) von Ebene (18) zu Ebene zunimmt und/oder wobei, gesehen in der Richtung von der ersten äußersten Platte (12, 16) zu der gegenüberliegenden äußersten Platte (16^{iv}) des Verteiler- oder Kollektorelements (10), die Anzahl der Öffnungen (28, 28', 28", 28‴, 28^{iv}, 38, 38', 38", 38‴, 38'^{v}) einer Platte (12') von Ebene (18) zu Ebene zunimmt.

4. Verteiler- oder Kollektorelement (10) nach einem der vorstehenden Ansprüche, wobei die Längen aller Fluidwege (33), die sich von einer Öffnung der ersten äußersten Platte (12, 16) zu einer Öffnung der gegenüberliegenden äußersten Platte (16^{iv}) des Verteiler- oder Kollektorelements (10) erstrecken, zumindest im Wesentlichen gleich sind.

5. Verteiler- oder Kollektorelement (10) nach einem der vorstehenden Ansprüche, wobei alle Öffnungen (20) jeder der mindestens drei Platten (12, 12', 12", 16, 16', 16", 16‴, 16^{iv}) zumindest im Wesentlichen regelmäßig in jeder der mindestens drei Platten (12, 12', 12", 16, 16', 16", 16‴, 16^{iv}) angeordnet sind, wobei jeder der Abstände zwischen dem Mittelpunkt einer Öffnung (20) und dem Mittelpunkt der nächstgelegenen benachbarten Öffnung (20) von mindestens einer und vorzugsweise jeder der mindestens drei Platten (12, 12', 12", 16, 16', 16", 16‴, 16^{iv}) 80 bis 120 % des durchschnittlichen Abstands der Mittelpunkte aller Öffnungen (20) und ihrer nächstgelegenen benachbarten Öffnungen (20) der jeweiligen Platte (12, 12', 12", 16, 16', 16", 16‴, 16^{iv}) beträgt, wobei der durchschnittliche Abstand des Mittelpunkts aller Öffnungen (20) mit ihrer nächstgelegenen benachbarten Öffnung (20) der jeweiligen Platte (12, 12', 12") bestimmt wird, indem die Abstände zwischen den Mittelpunkten jeder Öffnung (20) und dem Mittelpunkt ihrer nächstgelegenen Öffnung (20) der Platte (12, 12', 12", 16, 16', 16", 16‴, 16^{iv}) gemessen wird, indem alle diese gemessenen Abstände der Platte (12, 12', 12", 16, 16', 16", 16‴, 16^{iv}) addiert werden und die Summe durch die Anzahl der Öffnungen (20) der Platte (12, 12', 12", 16, 16', 16", 16‴, 16^{iv}) geteilt wird.

6. Verteiler- oder Kollektorelement (10) nach einem der vorstehenden Ansprüche, wobei die Öffnungen (20) jeder der mindestens drei Platten (12, 12', 12", 16, 16', 16", 16‴, 16^{iv}) zumindest im Wesentlichen gitterartig in jeder der mindestens drei Platten (12, 12', 12", 16, 16', 16", 16‴, 16^{iv}) angeordnet sind, wobei die Öffnungen (20) jeder der mindestens drei Platten (12, 12', 12", 16, 16', 16", 16‴, 16^{iv}) in der jeweiligen Platte (12, 12', 12", 16, 16', 16", 16‴, 16^{iv}) in (2)^{m} Reihen und (2)^{m} Spalten angeordnet sind, wobei m eine ganze Zahl von 1 bis 10, vorzugsweise von 1 bis 8 und mehr bevorzugt von 2 bis 6 ist.

7. Verteiler- oder Kollektorelement (10) nach einem der vorstehenden Ansprüche, wobei alle Öffnungen (28, 28', 28", 28‴, 28^{iv}, 38, 38', 38", 38‴, 38'^{v}) jeder der mindestens drei Platten (12, 12', 12", 16, 16', 16", 16‴, 16^{iv}) zumindest im Wesentlichen regelmäßig in jeder der mindestens drei Platten (12, 12', 12", 16, 16', 16", 16‴, 16^{iv}) angeordnet sind, wobei jeder der Abstände zwischen dem Mittelpunkt einer Öffnung (28, 28', 28", 28"', 28^{iv}, 38, 38', 38", 38"', 38'^{v}) und dem Mittelpunkt der nächstgelegenen benachbarten Öffnung (28, 28', 28", 28'", 28iv, 38, 38', 38", 38‴, 38'^{v}) jeder der mindestens drei Platten (12, 12', 12", 16, 16', 16", 16‴, 16^{iv}) 80 bis 120 % des durchschnittlichen Abstands der Mittelpunkte aller Öffnungen (28, 28', 28", 28‴, 28^{iv}, 38, 38', 38", 38‴, 38'^{v}) und ihrer nächstgelegenen benachbarten Öffnungen (28, 28', 28", 28'", 28^{iv}, 38, 38', 38", 38‴, 38'^{v}) der jeweiligen Platte (12, 12', 12", 16, 16', 16", 16‴, 16^{iv}) beträgt, wobei der durchschnittliche Abstand der Mittelpunkte aller Öffnungen (28, 28', 28", 28"', 28^{iv}, 38, 38', 38", 38"', 38'^{v}) mit ihren nächstgelegenen benachbarten Öffnungen (28, 28', 28", 28'", 28^{iv}, 38, 38', 38", 38‴, 38'^{v}) der jeweiligen Platte (12, 12', 12", 16, 16', 16", 16‴, 16^{iv}) bestimmt wird, indem die Abstände zwischen dem Mittelpunkt jeder Öffnung (28, 28', 28", 28‴, 28^{iv}, 38, 38', 38", 38‴, 38'^{v}) und dem Mittelpunkt ihrer nächstgelegenen Öffnung (28, 28', 28", 28‴, 28^{iv}, 38, 38', 38", 38‴, 38'^{v}) der Platte (12, 12', 12", 16, 16', 16", 16‴, 16^{iv}) gemessen wird, indem alle diese gemessenen Abstände der Platte (12, 12', 12", 16,16', 16", 16‴, 16^{iv}) addiert werden und die Summe durch die Anzahl der Öffnungen (28, 28', 28", 28'", 28^{iv}, 38, 38', 38", 38‴, 38'^{v}) der Platte (12, 12', 12", 16, 16', 16", 16‴, 16^{iv}) geteilt wird.

8. Verteiler- oder Kollektorelement (10) nach einem der vorstehenden Ansprüche, das 2 bis 15 Fraktalplatten (12, 12', 12") umfasst, wobei jede der Fraktalplatten (12, 12', 12") eine geringere Anzahl von Öffnungen (20) umfasst als eine Fraktalplatte (12', 12"), die in der Richtung von der ersten äußersten (12) zu der gegenüberliegenden äußersten Fraktalplatte (12ⁱⁱ) des Verteiler- oder Kollektorelements (10) benachbart ist, wobei alle Fraktalplatten (12, 12', 12") zueinander benachbart sind, wobei die erste Fraktalplatte (12) die erste äußerste Platte (12) des Verteilerelements (10) ist, wobei die Anzahl der Öffnungen (20) in jeder Fraktalplatte (12, 12', 12") 4 × (4)" ist, wobei n die Nummer der jeweiligen Fraktalplatte (12, 12', 12") in Bezug auf die erste äußerste Fraktalplatte (12) ist, wobei die erste äußerste Fraktalplatte (12) Fraktalplatte 1 ist.

9. Verteiler- oder Kollektorelement (10) nach einem der vorstehenden Ansprüche, wobei mindestens eine der mindestens drei Platten (12, 12', 12", 16, 16', 16", 16‴, 16^{iv}) eine Verteilungsplatte (16, 16', 16", 16‴, 16^{iv}) ist, wobei jede der mindestens einen Verteilungsplatten (16, 16', 16", 16‴, 16^{iv}) die gleiche Anzahl von Öffnungen (20) umfasst, wie eine Platte (12", 16, 16', 16", 16'"), die in der Richtung entgegengesetzt der Richtung von der ersten äußersten (12) zu der gegenüberliegenden äußersten Platte (16^{iv}) des Verteiler- oder Kollektorelements (10) benachbart ist, und wenn keine derartige benachbarte Platte vorhanden ist, die gleiche Anzahl von Öffnungen (20) wie eine Platte (16^{iv}), die in der Richtung von der ersten äußersten (12) zu der gegenüberliegenden äußersten Platte (16^{iv}) des Verteiler- oder Kollektorelements (10) benachbart ist.

10. Verteiler- oder Kollektorelement (10) nach Anspruch 9, wobei jede der mindestens einen Verteilungsplatten (16, 16', 16", 16'", 16^{iv}) die gleiche Form aufweist wie eine Platte (12", 16, 16', 16", 16‴), die in der Richtung entgegengesetzt zu der Richtung von der ersten äußersten (12) zu der gegenüberliegenden äußersten Platte (16^{iv}) benachbart ist, und wenn keine derartige benachbarte Platte vorhanden ist, die gleiche Form wie eine Platte (16^{iv}), die in der Richtung von der ersten äußersten (12) zu der gegenüberliegenden äußersten Platte (16^{iv}) benachbart ist, und wobei die Öffnungen (20) in jeder der mindestens einen Verteilungsplatte (16, 16', 16", 16'", 16^{iv}) an den gleichen Stellen ausgebildet sind wie in einer Platte (12", 16, 16', 16", 16'"), die in der Richtung entgegengesetzt zu der Richtung von der ersten äußersten (12) zu der gegenüberliegenden äußersten Platte (16^{iv}) benachbart ist, und wenn keine derartige benachbarte Platte (12", 16, 16', 16", 16‴) vorhanden ist, an denselben Stellen wie in einer Platte (12", 16, 16', 16", 16‴), die in der Richtung von der ersten äußersten (12) zu der gegenüberliegenden äußersten Platte (16^{iv}) benachbart ist.

11. Verteiler- oder Kollektorelement (10) nach Anspruch 9 oder 10, das 1 bis 3 und vorzugsweise 2 oder 3 Verteilungsplatten (16, 16', 16", 16‴, 16^{iv}) umfasst, wobei jede der Verteilungsplatten (16, 16', 16", 16'", 16^{iv}) eine höhere Anzahl von Öffnungen (38, 38', 38", 38'", 38^{iv}) aufweist als eine Platte (12", 16, 16', 16", 16‴), die in der Richtung entgegengesetzt zu der Richtung von der ersten äußersten (12) zu der gegenüberliegenden äußersten Platte (16^{iv}) benachbart ist, falls vorhanden.

12. Verteiler- oder Kollektorelement (10) nach einem der Ansprüche 1 bis 8, das nur Fraktalplatten (12, 12', 12") umfasst, nämlich 3 bis 15 Fraktalplatten (12, 12', 12").

13. Verteiler- oder Kollektorelement (10) nach einem der Ansprüche 1 bis 7 und 9 bis 12, das nur Verteilungsplatten (16, 16', 16", 16'", 16^{iv}) umfasst, nämlich 3 bis 10 Verteilungsplatten (16, 16', 16", 16'", 16^{iv}).

14. Verteiler- oder Kollektorelement (10) nach einem der Ansprüche 1 bis 11, das mindestens eine Fraktalplatte (12, 12', 12") und mindestens eine Verteilungsplatte (16, 16', 16", 16'", 16^{iv}) umfasst, wobei alle der mindestens einen Verteilungsplatten (16, 16', 16", 16'", 16^{iv}), gesehen in der Richtung von der ersten äußersten (12, 16) zu der gegenüberliegenden äußersten Platte (16^{iv}) des Verteiler- oder Kollektorelements (10), hinter allen der mindestens einen Fraktalplatte (12, 12', 12") angeordnet sind.

15. Vorrichtung, umfassend ein oder mehrere Verteilerelemente (10) nach einem der vorstehenden Ansprüche und/oder ein oder mehrere Kollektorelemente (10) nach einem der vorstehenden Ansprüche, wobei:
i) die Vorrichtung eine Stoffaustauschsäule (8), ein Mischer, eine Dispergiervorrichtung, eine Schäumvorrichtung, ein chemischer Reaktor, ein Kristallisator oder ein Verdampfer ist oder
ii) die Vorrichtung eine Stoffaustauschsäule (8) ist und unter dem einen oder den mehreren Verteilerelementen (10) und/oder über dem einen oder den mehreren Kollektorelementen (10) eine Stoffübertragungsstruktur umfasst, die aus der Gruppe ausgewählt ist, die aus Kontaktschalen, Füllkörpern und strukturierten Packungen (42) besteht, oder
iii) die Vorrichtung eine Stoffaustauschsäule (8) ist und unter dem einen oder den mehreren Verteilerelementen (10) und/oder über dem einen oder den mehreren Kollektorelementen (10) eine Stoffübertragungsstruktur umfasst, die eine wabenförmige Form einschließlich Kapillaren aufweist, wobei die Wände (22), die die Kanäle (24) definieren, stufenförmig oder aus Gewebe hergestellt oder willkürlich geformte offenzellige Schaumstoffe sind, oder
iv) die Vorrichtung unter dem einen oder den mehreren Verteilerelementen (10) und/oder über dem einen oder den mehreren Kollektorelementen (10) eine Stoffübertragungsstruktur umfasst, die eine Kontaktzone umfasst, die dazu ausgebildet ist, ein zweites Fluid zu leiten, und wobei in der Kontaktzone das erste Fluid mit dem zweiten Fluid in Kontakt gebracht werden kann, wobei in der Kontaktzone mindestens ein Strömungsschalter zum Unterbrechen eines Stroms des zweiten Fluids bereitgestellt ist, oder
v) die Vorrichtung unter dem einen oder den mehreren Verteilerelementen (10) und/oder über dem einen oder den mehreren Kollektorelementen (10) eine Stoffübertragungsstruktur umfasst, die aus der Gruppe ausgewählt ist, bestehend aus Geweben, offenporigen Materialien, Kapillaren, Stufenstrukturen und beliebigen Kombinationen von zwei oder mehr der vorstehend genannten Strukturen.

16. Verwendung eines Verteilerelements (10) nach einem der vorstehenden Ansprüche zum gleichmäßigen Verteilen eines ersten Fluids auf einer Querschnittsebene und/oder eines Kollektorelements (10) nach einem der vorstehenden Ansprüche zum Sammeln eines ersten Fluids, das auf einer Querschnittsebene verteilt ist, umfassend den Schritt des Strömens eines ersten Fluids in mindestens einen des einen oder der mehreren Hohlräume, die Fluidwege definieren, und des Strömens eines zweiten Fluids durch die Kanäle des Verteilers und/ Elements, wobei vorzugsweise der Verteiler und/ Element in einer Stoffaustauschsäule (8), einem Mischer, einer Dispergiervorrichtung, einer Schaumvorrichtung oder einem chemischen Reaktor verwendet wird.

## Revendications

1. Élément distributeur (10) destiné à distribuer uniformément un premier fluide sur un plan de coupe transversale ou élément collecteur (10) destiné à collecter un premier fluide, distribué sur un plan de coupe transversale, dans lequel un second fluide principal s'écoule dans un écoulement à co-courant et/ou dans un écoulement à contre-courant par rapport au premier fluide à travers l'élément distributeur (10), l'élément distributeur (10) comprenant au moins trois plaques (12, 12', 12", 16, 16', 16", 16‴, 16^{iv}), agencées au moins sensiblement parallèlement les unes aux autres, un niveau (18) étant défini entre chacune de deux plaques adjacentes (12, 12', 12", 16, 16', 16", 16‴, 16^{iv}), chacune des plaques (12, 12', 12", 16, 16', 16", 16‴, 16^{iv}) comprenant un certain nombre d'ouvertures (20), des parois (22) étant agencées dans chacun des niveaux (18), chacune des parois s'étendant à partir d'un côté d'une plaque (12, 12', 16, 16', 16", 16'") vers le côté adjacent d'une plaque adjacente (12', 12", 16, 16', 16", 16‴, 16^{iv}) de telle sorte que chaque paroi (22) définit un canal (24) à travers lequel doit circuler le second fluide principal, les canaux (24) reliant de manière fluidiquement étanche toutes ouvertures (20) entre des plaques adjacentes (12, 12', 12", 16, 16', 16", 16'", 16^{iv}), un ou plusieurs espaces creux (33) étant formés dans chacun des niveaux (18, 18) entre les parois (22) définissant les canaux (24), à travers lesquels espaces creux le premier fluide peut s'écouler, chacune des plaques (12, 12', 12", 16, 16', 16", 16'", 16^{iv}) comprenant au moins un orifice (28, 28', 28", 28'", 28^{iv}, 38, 38', 38", 38‴, 38'^{v}) qui n'est pas relié de manière fluidiquement étanche à une ou plusieurs ouvertures (20) d'une plaque adjacente (12, 12', 12", 16, 16', 16", 16‴, 16^{iv}) par un canal (24) et étant agencé de manière adjacente à ou aux espaces creux (33) du ou des niveaux adjacents (18) de sorte que, dans chaque niveau (18), entre les orifices (28, 28', 28", 28'", 28^{iv}, 38, 38', 38", 38‴, 38'^{v}) des plaques adjacentes (12, 12', 12", 16, 16', 16", 16'", 16^{iv}) au moins deux trajets de fluide (33) s'étendent dans l'un ou les espaces creux (33) du niveau (18), la totalité des au moins deux trajets de fluide (33) de chaque niveau (18) possédant sensiblement la même longueur, le nombre de trajets de fluide (33) augmentant, vu dans la direction allant d'une plaque la plus externe (12, 16) vers la plaque la plus externe opposée (16^{iv}) de l'élément distributeur ou collecteur (10), au moins pour 75 % des plaques (12, 12', 12"), d'un niveau à l'autre, et les canaux (24) à travers lesquels doit circuler le second fluide principal étant séparés de manière fluidiquement étanche par les parois (22) par rapport à la totalité de l'un ou des espaces creux (33) définissant les trajets de fluide (33), à travers lesquels le premier fluide peut s'écouler.

2. Élément distributeur ou collecteur (10) selon la revendication 1, dans lequel le nombre de trajets de fluide (33) augmente, vu dans la direction allant de la première plaque la plus externe (12, 16) vers la plaque la plus externe opposée (16^{iv}) de l'élément distributeur ou collecteur (10), au moins pour 80 %, plus préférablement pour au moins 90 %, encore plus préférablement pour au moins 95 %, encore plus préférablement pour au moins 98 % et le plus préférablement pour la totalité des plaques d'un niveau (18) à l'autre.

3. Élément distributeur ou collecteur (10) selon la revendication 1 ou 2, dans lequel, vu dans la direction allant de la première plaque la plus externe (12, 16) vers la plaque la plus externe opposée (16^{iv}) de l'élément distributeur ou collecteur (10), le nombre de canaux (24) augmente d'un niveau (18) à l'autre et/ou dans lequel, vu dans la direction allant de la première plaque la plus externe (12, 16) vers la plaque la plus externe opposée (16^{iv}) de l'élément distributeur ou collecteur (10), le nombre d'orifices (28, 28', 28", 28'", 28^{iv}, 38, 38', 38", 38‴, 38'^{v}) d'une plaque (12') augmente d'un niveau (18) à l'autre.

4. Élément distributeur ou collecteur (10) selon l'une quelconque des revendications précédentes, dans lequel les longueurs de tous les trajets de fluide (33) s'étendant à partir d'un orifice de la première plaque la plus externe (12, 16) vers un orifice de la plaque la plus externe opposée (16^{iv}) de l'élément distributeur ou collecteur (10) sont au moins sensiblement identiques.

5. Élément distributeur ou collecteur (10) selon l'une quelconque des revendications précédentes, dans lequel la totalité des ouvertures (20) de chacune des au moins trois plaques (12, 12', 12", 16, 16', 16", 16‴, 16^{iv}) sont au moins sensiblement régulièrement agencées dans chacune des au moins trois plaques (12, 12', 12", 16, 16', 16", 16‴, 16^{iv}), chacune des distances entre le point central d'une ouverture (20) et le point central de l'ouverture adjacente la plus proche (20) d'au moins une et de préférence de chacune des au moins trois plaques (12, 12', 12", 16, 16', 16", 16‴, 16^{iv}) représentant 80 à 120 % de la distance moyenne des points centraux de toutes les ouvertures (20) et leurs ouvertures adjacentes les plus proches (20) de la plaque respective (12, 12', 12", 16, 16', 16", 16‴, 16^{iv}), la distance moyenne du point central de toutes les ouvertures (20) avec leur ouverture adjacente la plus proche (20) de la plaque respective (12, 12', 12") étant déterminée par mesure des distances entre les points centraux de chaque ouverture (20) et le point central de son ouverture la plus proche (20) de la plaque (12, 12', 12", 16, 16', 16", 16‴, 16^{iv}), par addition de toutes ces distances mesurées de la plaque (12, 12', 12", 16, 16', 16", 16'", 16^{iv}) et division de la somme par le nombre d'ouvertures (20) de la plaque (12, 12', 12", 16, 16', 16", 16'", 16^{iv}).

6. Élément distributeur ou collecteur (10) selon l'une quelconque des revendications précédentes, dans lequel les ouvertures (20) de chacune des au moins trois plaques (12, 12', 12", 16, 16', 16", 16'", 16^{iv}) sont agencées au moins sensiblement en forme de grille dans chacune des au moins trois plaques (12, 12', 12", 16, 16', 16", 16‴, 16^{iv}), les ouvertures (20) de chacune des au moins trois plaques (12, 12', 12", 16, 16', 16", 16'", 16^{iv}) étant agencées dans la plaque respective (12, 12', 12", 16, 16', 16", 16‴, 16^{iv}) en (2)^{m} rangées et (2)^{m} colonnes, m représentant un nombre entier de 1 à 10, de préférence de 1 à 8 et plus préférablement de 2 à 6.

7. Élément distributeur ou collecteur (10) selon l'une quelconque des revendications précédentes, dans lequel la totalité des orifices (28, 28', 28", 28'", 28^{iv}, 38, 38', 38", 38'", 38'v) de chacune des au moins trois plaques (12, 12', 12", 16, 16', 16", 16‴, 16^{iv}) sont agencées au moins sensiblement régulièrement dans chacune des au moins trois plaques (12, 12', 12", 16, 16', 16", 16‴, 16^{iv}), chacune des distances entre le point central d'un orifice (28, 28', 28", 28'", 28^{iv}, 38, 38', 38", 38'", 38'^{v}) et le point central de l'orifice adjacent le plus proche (28, 28', 28", 28'", 28iv, 38, 38', 38", 38‴, 38'^{v}) de chacune des au moins trois plaques (12, 12', 12", 16, 16', 16", 16‴, 16^{iv}) représentant 80 à 120 % de la distance moyenne des points centraux de tous les orifices(28, 28', 28", 28'", 28^{iv}, 38, 38', 38", 38'", 38'^{v}) et leurs orifices adjacents les plus proches (28, 28', 28", 28'", 28^{iv}, 38, 38', 38", 38‴, 38'^{v}) de la plaque respective (12, 12', 12", 16, 16', 16", 16‴, 16^{iv}), la distance moyenne des points centraux de tous les orifices (28, 28', 28", 28'", 28^{iv}, 38, 38', 38", 38'", 38'^{v}) avec leurs orifices adjacents les plus proches (28, 28', 28", 28'", 28iv, 38, 38', 38", 38‴, 38'^{v}) de la plaque respective (12, 12', 12", 16, 16', 16", 16'", 16^{iv}) étant déterminée par la mesure des distances entre le point central de chaque orifice (28, 28', 28", 28'", 28^{iv}, 38, 38', 38", 38'", 38'^{v}) et le point central de son orifice le plus proche (28, 28', 28", 28'", 28^{iv}, 38, 38', 38", 38'", 38'^{v}) de la plaque (12, 12', 12", 16, 16', 16", 16'", 16^{iv}), par addition de toutes ces distances mesurées de la plaque (12, 12', 12", 16, 16', 16", 16‴, 16^{iv}) et division de la somme par le nombre d'orifices (28, 28', 28", 28‴, 28iv, 38, 38', 38", 38‴, 38'^{v}) de la plaque (12, 12', 12", 16, 16', 16", 16'", 16^{iv}).

8. Élément distributeur ou collecteur (10) selon l'une quelconque des revendications précédentes, qui comprend 2 à 15 plaques fractales (12, 12', 12"), dans lequel chacune des plaques fractales (12, 12', 12"), comprend un nombre d'ouvertures (20) inférieur à celui d'une plaque fractale (12', 12") adjacente dans la direction allant de la première plaque fractale la plus externe (12) vers la plaque fractale la plus externe opposée (12ⁱⁱ) de l'élément distributeur ou collecteur (10), toutes les plaques fractales (12, 12', 12") étant adjacentes les unes aux autres, la première plaque fractale (12) étant la première plaque la plus externe (12) de l'élément distributeur (10), le nombre d'ouvertures (20) dans chaque plaque fractale (12, 12', 12") étant 4 × (4)ⁿ, n représentant le nombre de la plaque fractale respective (12, 12', 12") par rapport à la première plaque fractale la plus externe (12), la première plaque fractale la plus externe (12) étant la plaque fractale 1.

9. Élément distributeur ou collecteur (10) selon l'une quelconque des revendications précédentes, dans lequel au moins l'une des au moins trois plaques (12, 12', 12", 16, 16', 16", 16‴, 16^{iv}) est une plaque de distribution (16, 16', 16", 16'", 16^{iv}), chacune de l'au moins une plaque de distribution (16, 16', 16", 16'", 16^{iv}) comprenant le même nombre d'ouvertures (20) que celui de la plaque (12", 16, 16', 16", 16‴) adjacente dans la direction opposée à la direction allant de la première plaque la plus externe (12) vers la plaque la plus externe opposée (16^{iv}) de l'élément distributeur ou collecteur (10) et, si aucune telle plaque adjacente n'est présente, le même nombre d'ouvertures (20) que celui d'une plaque (16^{iv}) adjacente dans la direction allant de la première plaque la plus externe (12) vers la plaque la plus externe opposée (16^{iv}) de l'élément distributeur ou collecteur (10).

10. Élément distributeur ou collecteur (10) selon la revendication 9, dans lequel chacune de l'au moins une plaque de distribution (16, 16', 16", 16‴, 16^{iv}) possède la même forme que celle d'une plaque (12", 16, 16', 16", 16‴) adjacente dans la direction opposée à la direction allant de la première plaque la plus externe (12) vers la plaque la plus externe opposée (16^{iv}) et, si aucune telle plaque adjacente n'est présente, la même forme que celle d'une plaque (16^{iv}) adjacente dans la direction allant de la première plaque la plus externe (12) vers la plaque la plus externe opposée (16^{iv}) et les ouvertures (20) étant formées dans chacune de l'au moins une plaque de distribution (16, 16', 16", 16'", 16^{iv}) aux mêmes emplacements que ceux dans une plaque (12", 16, 16', 16", 16‴) adjacente dans la direction opposée à la direction allant de la première plaque la plus externe (12) vers la plaque la plus externe opposée (16^{iv}) et, si aucune telle plaque adjacente (12", 16, 16', 16", 16‴) n'est présente, aux mêmes emplacements que ceux dans une plaque (12", 16, 16', 16", 16‴) adjacente dans la direction allant de la première plaque la plus externe (12) vers la plaque la plus externe opposée (16^{iv}).

11. Élément distributeur ou collecteur (10) selon la revendication 9 ou 10, qui comprend 1 à 3 et de préférence 2 ou 3 plaques de distribution (16, 16', 16", 16'", 16^{iv}), dans lequel chacune des plaques de distribution (16, 16', 16", 16‴, 16^{iv}) possède un nombre d'orifices (38, 38', 38 ", 38‴, 38^{iv}) supérieur à celui d'une plaque (12", 16, 16', 16", 16'") adjacente dans la direction opposée à la direction allant de la première plaque la plus externe (12) vers la plaque la plus externe opposée (16^{iv}), s'ils sont présents.

12. Élément distributeur ou collecteur (10) selon l'une quelconque des revendications 1 à 8, qui comprend uniquement des plaques fractales (12, 12', 12"), à savoir 3 à 15 plaques fractales (12, 12', 12").

13. Élément distributeur ou collecteur (10) selon l'une quelconque des revendications 1 à 7 et 9 à 12, qui comprend uniquement des plaques de distribution (16, 16', 16", 16'", 16^{iv}), à savoir 3 à 10 plaques de distribution (16, 16', 16", 16'", 16^{iv}).

14. Élément distributeur ou collecteur (10) selon l'une quelconque des revendications 1 à 11, qui comprend au moins une plaque fractale (12, 12', 12") et au moins une plaque de distribution (16, 16', 16", 16'", 16^{iv}), dans lequel la totalité de l'au moins une plaque de distribution (16, 16', 16", 16'", 16^{iv}) est agencée, vue dans la direction allant de la première plaque la plus externe (12, 16) vers la plaque la plus externe opposée (16^{iv}) de l'élément distributeur ou collecteur (10), derrière la totalité de l'au moins une plaque fractale (12, 12', 12").

15. Appareil comprenant un ou plusieurs éléments distributeurs (10) selon l'une quelconque des revendications précédentes et/ou un ou plusieurs éléments collecteurs (10) selon l'une quelconque des revendications précédentes, dans lequel :
i) l'appareil est une colonne de transfert de masse (8), un mélangeur, un disperseur, un dispositif de moussage, un réacteur chimique, un cristallisoir ou un évaporateur ou
ii) l'appareil est une colonne de transfert de masse (8) et comprend en dessous du ou des éléments distributeurs (10) et/ou au-dessus du ou des éléments collecteurs (10) une structure de transfert de masse, qui est choisie dans le groupe constitué de plateaux de contact, garnissages en vrac et garnissages structurés (42) ou
iii) l'appareil est une colonne de transfert de masse (8) et comprend en dessous du ou des éléments distributeurs (10) et/ou au-dessus du ou des éléments collecteurs (10) une structure de transfert de masse, qui possède une forme en nid d'abeilles comportant des capillaires, les parois (22) définissant les canaux (24) étant en forme d'escalier ou en tissu ou étant des mousses à cellules ouvertes formées arbitrairement ou
iv) l'appareil comprend en dessous du ou des éléments distributeurs (10) et/ou au-dessus du ou des éléments collecteurs (10) une structure de transfert de masse, qui comprend une zone de contact, laquelle zone de contact est conçue pour guider un second fluide et moyennant quoi, dans la zone de contact, le premier fluide peut être amené en contact avec le second fluide, au moins un dispositif d'interruption du flux étant disposé dans la zone de contact pour interrompre un écoulement du second fluide ou
v) l'appareil comprend en dessous du ou des éléments distributeurs (10) et/ou au-dessus du ou des éléments collecteurs (10) une structure de transfert de masse, qui est choisie dans le groupe constitué de tissus, matériaux à pores ouverts, capillaires, structures en escalier et combinaisons arbitraires de deux ou plus des structures susmentionnées.

16. Utilisation d'un élément distributeur (10) selon l'une quelconque des revendications précédentes pour distribuer uniformément un premier fluide sur un plan de coupe transversale et/ou d'un élément collecteur (10) selon l'une quelconque des revendications précédentes pour collecter un premier fluide distribué sur un plan de coupe transversale comprenant l'étape consistant à faire circuler un premier fluide dans au moins l'un du ou des espaces creux définissant les trajets de fluide et faire circuler un second fluide à travers les canaux du distributeur et/ élément, de préférence le distributeur et/ l'élément étant utilisés dans une colonne de transfert de masse (8), un mélangeur, un disperseur, un dispositif moussant ou un réacteur chimique.
